**Europäisches Patentamt**

**European Patent Office**

**Office européen des brevets**

(11) Veröffentlichungsnummer: **0 106 325**
**B1**

(12) **EUROPÄISCHE PATENTSCHRIFT**

(45) Veröffentlichungstag der Patentschrift:
25.11.87

(21) Anmeldenummer: **83110234.8**

(22) Anmeldetag: **13.10.83**

(51) Int. Cl.⁴: **F 16 H 7/08**

(54) **Kettenspanner.**

(30) Priorität: 15.10.82 DE 3238331

(43) Veröffentlichungstag der Anmeldung:
25.04.84 Patentblatt 84/17

(45) Bekanntmachung des Hinweises auf die Patenterteilung:
25.11.87 Patentblatt 87/48

(84) Benannte Vertragsstaaten:
DE FR IT

(56) Entgegenhaltungen:
DD-A-29 063
DE-A-1 650 610
DE-A-1 650 917
DE-A-2 934 604
DE-A-3 011 582
DE-B-1 141 846
DE-B-1 212 383
DE-B-1 450 801
GB-A-1 422 727
US-A-1 806 902
US-A-3 710 634
US-A-3 812 733
US-A-4 299 584

(73) Patentinhaber: **Joh. Winklhofer & Söhne, Albert-Rosshaupter- Strasse 53, D-8000 München 70 (DE)**

(72) Erfinder: **Summerer, Georg, Fuchsbichl 1a, D-8021 Icking (DE)**
Erfinder: **Maier, Robert, Olgastrasse 11, D-8000 München 19 (DE)**
Erfinder: **Staudinger, Siegfried, Kunstmannstrasse 28, D-8000 München 50 (DE)**
Erfinder: **Hönigs, Oswin, Kirchwinkl 6b, D-8156 Otterfing (DE)**

(74) Vertreter: **Weickmann, Heinrich, Dipl.- Ing., Patentanwälte Dipl.- Ing. H.Weickmann Dipl.-Phys.Dr. K.Fincke Dipl.- Ing. F.A.Weickmann Dipl.- Chem. B. Huber Dr.- Ing. H. Liska Dipl.-Phys.Dr. J. Prechtel Postfach 860820, D-8000 München 86 (DE)**

EP 0 106 325 B1

## Beschreibung

Die Erfindung betrifft Kettenspanner nach den Oberbegriffen der Ansprüche 1, 6, 7, 9, 15, 16, 18 und 19.

Kettenspanner nach den Oberbegriffen der Ansprüche 1, 6 und 7 sind nach der DE-A-16 50 917 bekannt. Bei diesen Kettenspannern ist die als Sperrfläche dienende Sägezahnreihe am Kolben angeordnet und der mit der Sperrfläche zusammenwirkende Sperriegel am Führungsgehäuse angebracht. Der Sperriegel ist bolzenartig und mit einem einzigen Sägezahn versehen. Das vom Sägezahn abgewandte Ende des Sperrriegels weist eine Umfangsnut zum Eingriff in ein Langloch einer den Sperriegel halternden Blattfeder auf.

Kettenspanner nach den Oberbegriffen der Ansprüche 9, 15, 16, 18 und 19 sind nach der DE-A-16 50 910 bekannt. Bei diesen Kettenspannern ist die als Sperrfläche dienende Sägezahnreihe am Führungsgehäuse angeordnet. Ein am Kolben angeordnetes Federelement wirkt mit der Sägezahnreihe als Sperreinrichtung zusammen. Das Federelement ist recht kompliziert geformt.

Aufgabe der Erfindung ist es, die Sperreinrichtungen der Kettenspanner nach den Oberbegriffen der Ansprüche 1, 6, 7, 9, 15, 16, 18 und 19 unter Beibehaltung eines begrenzten Einfahrhubs der Kolben bei zuverlässiger Rastfunktion zu vereinfachen.

Diese Aufgabe wird in verschiedener, auf dem gleichen Prinzip beruhender Weise durch die kennzeichnenden Merkmale der Ansprüche 1, 6, 7, 9, 15, 16, 18 und 19 gelöst.

Anspruch 1 kennzeichnet eine Ausführungsform, die auch bei hohen Einfahrkräften eine zuverlässige Sperrung der Einfahrbewegung nach Zurücklegung des zulässigen Einfahrhubs sicherstellt.

In der Ausbildung gemäß Anspruch 2 bleibt die Anzugsschräge vor Verschleiß bewahrt.

Die Ausbildung gemäß Anspruch 3 bewirkt eine besonders zuverlässige Sperrung.

Eine besonders raumsparende und dauerhafte Vorspannung des Vorspannelements bewirkt die Ausbildung gemäß Anspruch 4.

Ein Auseinanderfallen von Kolben und Führungsgehäuse unter Ausnutzung des Sperriegels wird durch die Ausbildung gemäß Anspruch 5 erreicht.

Anspruch 6 kennzeichnet ein Sperrglied, das besonders kostengünstig herstellbar ist. Die Bügelendbereiche stehen über die Montageseitenfläche des Führungsgehäuses vor, solange sie an der Anschlagfläche anliegen, so daß man eine zwangsläufige Freigabe des Sperrgliedes bei der Montage des Führungsgehäuses erhält. Die geneigte Führungsfläche für den Eingriffsabschnitt stellt auch sicher, daß in der Transport- und Montageeinstellung des Kettenspanners der eingefahrene Kolben entgegen der Federkraft festgehalten wird. Hierbei befindet sich der Drahtbügel in seiner einen axialen Endstellung, in der der Eingriffsabschnitt aufgrund der geneigten Führungsfläche zwangsweise in die Sperrfläche eingreift. Da zur Herstellung der Vorspannung des Eingriffsendes der federnd ausgebildete Drahtbügel um eine zum Mittelabschnitt parallele Krümmungsachse vorgebogen ist, erspart man sich eine eigene Vorspannfeder.

Anspruch 7 kennzeichnet eine Ausführungsform, die sich durch robusten Aufbau und zuverlässige Funktion, insbesondere geringe Schmutzanfälligkeit, auszeichnet.

Eine besonders einfache Ausbildung der Vorspannfeder ist in Anspruch 8 angegeben.

Anspruch 9 kennzeichnet eine besonders kostengünstig herstellbare Ausführungsform. Die in die Sperrflächen einrastenden, radial nach außen gebogenen Endabschnitte lassen sich in gewissem Ausmaße gegenüber dem in der Umfangsnut des Kolbens verlaufenden Federabschnitt federnd in axialer Richtung auslenken so daß der gewünschte, geringfügige Einfahrhub des Kolbens gegeben ist. Zur Vergrößerung des Einfahrhubs kann die Breite der Umfangsnut dementsprechend größer als der Drahtfederdurchmesser gewählt werden.

Die Herstellung der Sperrflächen gestaltet sich besonders einfach, wenn die Sperrflächen gemäß Anspruch 10 ausgebildet sind. Da hierbei die Gehäusedurchbrechung in Achsrichtung beidseits abgeschlossen ist, wird überdies die Stabilität des Führungsgehäuses vergrößert und ein Auseinanderfallen von Führungsgehäuse und Kolben im ausgefahrenen Kolbenzustand verhindert.

Durch die Ausbildung gemäß Anspruch 11 kann der Kolben in der Montagestellung gehalten werden, welche im allgemeinen die eingefahrene Kolbenstellung ist, wobei die Vorspannfeder bzw. der Öldruck den Kolben in Richtung zur ausgefahrenen Kolbenstellung zu bewegen versucht, was jedoch durch die Verrastung der Drahtfeder mit der Erweiterungsnut verhindert wird. Da aufgrund der Gehäusedurchbrechung die Endabschnitte der Drahtfeder von außen her zugänglich sind, kann jederzeit die Verrastung der Drahtfeder in der Erweiterungsnut von Hand gelöst werden.

Die Ausbildung gemäß Anspruch 12 stellt sicher, daß nach erfolgter Montage die Verrastung auch tatsächlich gelöst ist. Steht beispielsweise der eingerastete Endabschnitt unmittelbar neben der Befestigungsbohrung über die entsprechende Führungsgehäuseseitenfläche vor an einer Stelle, an welcher der Kopf einer Befestigungsschraube schließlich anliegt, so ist der Monteur gezwungen, vor dem endgültigen Anziehen der Befestigungsschraube den Endabschnitt aus der Erweiterungsnut herauszuschwenken. Man kann auch den Endabschnitt derart abbiegen, daß er beim Anziehen der Befestigungsschraube vom Schraubenkopf selbsttätig aus der Erweiterungsnut herausgedrückt wird.

Die Ausbildung gemäß Anspruch 13 erleichtert das Einsetzen der Drahtfeder.

Besonders niedrige Herstellungskosten ergeben sich bei einer Ausbildung des Führungsgehäuses gemäß Anspruch 14.

Anspruch 15 kennzeichnet ebenfalls eine besonders kostengünstig herstellbare Ausführungsform. Die Blattfeder ist dabei einfach und schnell am Kolben zu befestigen, insbesondere dann, wenn die Blattfeder den Stift durchsetzt oder um den Stift wenigstens teilweise herumgebogen ist. Aufgrund ihrer Krümmung spreizt sich die Blattfeder bei einer Einfahrbewegung des Kolbens gegen die Sperrflächen und erzeugt so die gewünschte Sperrwirkung; die sich abspreizende Blattfeder erlaubt aufgrund ihrer Federeigenschaft einen gewissen Einfahrhub des Kolbens bei sperrender Blattfeder. Bei um den Stift wenigstens teilweise herumgebogener Blattfeder erhält man bedarfsweise ein zusätzliches Bewegungsspiel zwischen Stift und Blattfeder; bei nur teilweise um den Stift herumgebogener Blattfeder ergibt sich ein Selbstverstärkungseffekt der Sperrwirkung, wenn bei sperrender Blattfeder der Kolben weiter eingefahren wird und demzufolge der Stift keilartig die gebogene Blattfeder aufweitet.

Anspruch 16 kennzeichnet eine Ausführungsform, bei der sich die Sperrfläche besonders schnell und einfach, insbesondere durch Fräsen, herstellen läßt und sich durch besondere mechanische Robustheit auszeichnet.

Die Ausbildung nach Anspruch 17 verhindert in einfacher Weise ein Auseinanderfallen von Kolben und Führungsgehäuse.

Eine weitere besonders einfach herstellbare Ausführungsform, die sich überdies dadurch auszeichnet, daß der Endabschnitt des Drahtbügels bei verringerter Verschmutzungsgefahr der Sperrfläche geführt ist, kennzeichnet Anspruch 18.

Anspruch 19 kennzeichnet eine Ausführungsform, bei der die Sperreinrichtung vollständig innerhalb des Führungsgehäuses untergebracht ist, so daß sich ein kompaktes Äußeres bei äußerst geringer Verschmutzungsgefahr ergibt.

Die Ausbildung gemäß Anspruch 20 verhindert ein Auseinanderfallen von Kolben und Führungsgehäuse: In der Montagestellung wird der Spannerkopf, z. B. von der Vorspannfeder, in den abgebogenen Endbereich der Spiralnut gedrückt und verharrt dort; nach erfolgter Montage ist diese Verriegelung schnell und einfach dadurch zu lösen, daß der Spannerkopf auf das Führungsgehäuse hin gedrückt wird, woraufhin das Gleitstück zur Knickstelle der spannerkopfnahen Nutwand gelangt; wird nun der Spannerkopf losgelassen, so fädelt sich das Gleitstück selbsttätig in die sich an den abgebogenen Endbereich anschließende Spiralnut ein. Überdies kann bei dieser Ausbildung der Kolben im Bereich seines Kolbenendes gegenüber der Kolbenbohrung des Führungsgehäuses in einfacher Weise abgedichtet werden, so daß die Möglichkeit besteht, Drucköl in den Raum unterhalb des Kolbenendes einzuleiten, welches dazu dienen kann, zusätzlich oder anstelle einer Vorspannfeder den Kolben nach außen hin zu drücken; das Drucköl kann auch über eine entsprechende zentrale Durchgangsbohrung durch den Kolben hindurch zu einer Austrittsöffnung am Spannerkopf geführt werden, um hierdurch die Kette zu schmieren.

Bei sämtlichen, im Vorstehenden erläuterten Ausführungsformen kann man eine vorübergehende Festlegung des Kolbens innerhalb des Führungsgehäuses, insbesondere in der Transport- und Montagestellung des Kettenspanners mit eingeschobenem Kolben, durch die Ausbildung gemäß Anspruch 21 erreichen. Hierzu muß man lediglich den Kolben in die gewünschte axiale Stellung bringen und dann den Verriegelungsbolzen einsetzen. Da der Verriegelungsbolzen aus relativ leicht verformbarem Material, vorzugsweise Kunststoff, gebildet ist, wird der Verriegelungsbolzen, dessen Durchmesser dem der Gehäusebohrung entspricht, soweit eingedrückt, daß er vom Außenumfang des Kolbens entsprechend der Überschneidung der Kolbenbohrung mit der Gehäusebohrung verformt wird. Es ergibt sich ein Reibungskraftschluß zwischen Kolben und Verriegelungsbolzen, der den Kolben zuverlässig im Führungsgehäuse in seiner Axiallage sichert. Um nach erfolgter Montage des Kettenspanners selbsttätig eine Freigabe des Kolbens zu erreichen, hat der Verriegelungsbolzen den durchmesserverringerten Mittelabschnitt, welcher die Kolbenbohrung freigibt, wenn das entsprechende Verriegelungsbolzenende des eingesteckten Verriegelungsbolzens mit der Montageseitenfläche des Führungsgehäuses bündig abschließt.

Die Erfindung wird im folgenden an mehreren bevorzugten Ausführungsbeispielen anhand der Zeichnung erläutert.

Es zeigen:

Fig. 1 bis 4 eine erste Ausführungsform des erfindungsgemäßen Kettenspanners, und zwar

Fig. 1 eine Vorderansicht des Kettenspanners,

Fig. 2 einen Schnitt nach Linie II-II in Fig. 3,

Fig. 3 einen Schnitt nach Linie III-III in den Fig. 1, 2 und 4 und

Fig. 4 einen Schnitt nach Linie IV-IV in den Fig. 1 bis 3;

Fig. 5 eine Vorderansicht eines Führungsgehäuses aus einem Blechteil;

Fig. 6 die Abwicklung des Blechteils;.

Fig. 7 eine Draufsicht auf das Führungsgehäuse gemäß Fig. 5;

Fig. 8 eine Vorderansicht eines Teilausschnitts eines Kettenspanners ähnlich Fig. 1, jedoch mit einer Blattfeder als Sperrglied (Schnitt nach Linie VIII-VIII in Fig. 9);

Fig. 9 einen Schnitt der Anordnung in Fig. 8 nach der Linie IX-IX;

Fig.10 eine Vorderansicht eines Teilausschnitts ähnlich Fig. 8 mit einer anders gebogenen Blattfeder (Schnitt nach Linie X-X in Fig. 11);

Fig.11 einen Schnitt der Anordnung in Fig. 10 nach Linie XI-XI;

Fig.12 eine Vorderansicht eines Teilausschnitts ähnlich Fig. 8 und 10, jedoch mit einem Gummielement zwischen Blattfeder und Kolbenstift;

Fig.13 eine Vorderansicht eines Teilausschnitts ähnlich Fig. 8, 10 und 12, jedoch unter Verwendung eines Klemmkörpers, welcher an ebenen Sperrflächen anliegt;

Fig.14 einen Schnitt der Anordnung gemäß Fig. 13 nach Linie XIV-XIV;

Fig.15 eine Abwandlung des Klemmkörpers gemäß Fig. 13 und 14 mit eingesetzter Gummihülse;

Fig.16 eine Seitenansicht einer weiteren Ausführungsform des Kettenspanners;

Fig.17 eine Vorderansicht des Kettenspanners gemäß Fig. 16;

Fig. 18 eine Seitenansicht einer weiteren Ausführungsform des Kettenspanners;

Fig. 19 bis 22 eine weitere Ausführungsform und zwar

Fig. 19 eine Vorderansicht;

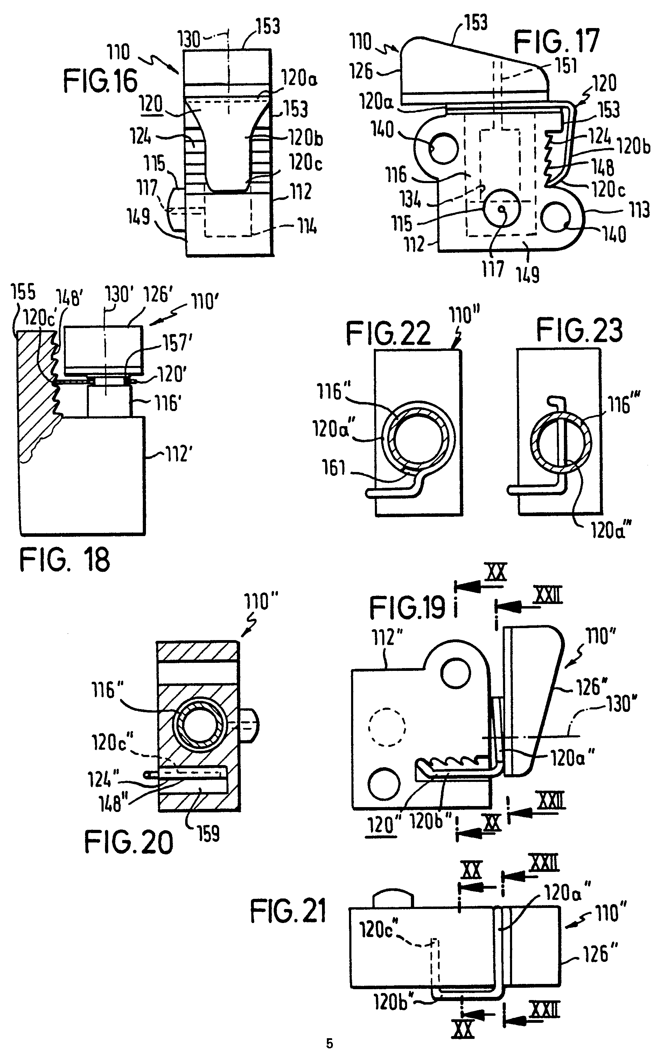

Fig. 20 einen Schnitt nach Linie XX-XX in Fig. 19 und 21;

Fig. 21 eine Seitenansicht; und

Fig. 22 einen Schnitt nach Linie XXII-XXII in den Fig. 19 und 21;

Fig. 23 einen Schnitt entsprechend Fig. 22 jedoch mit anderer Drahtbefestigungsart;

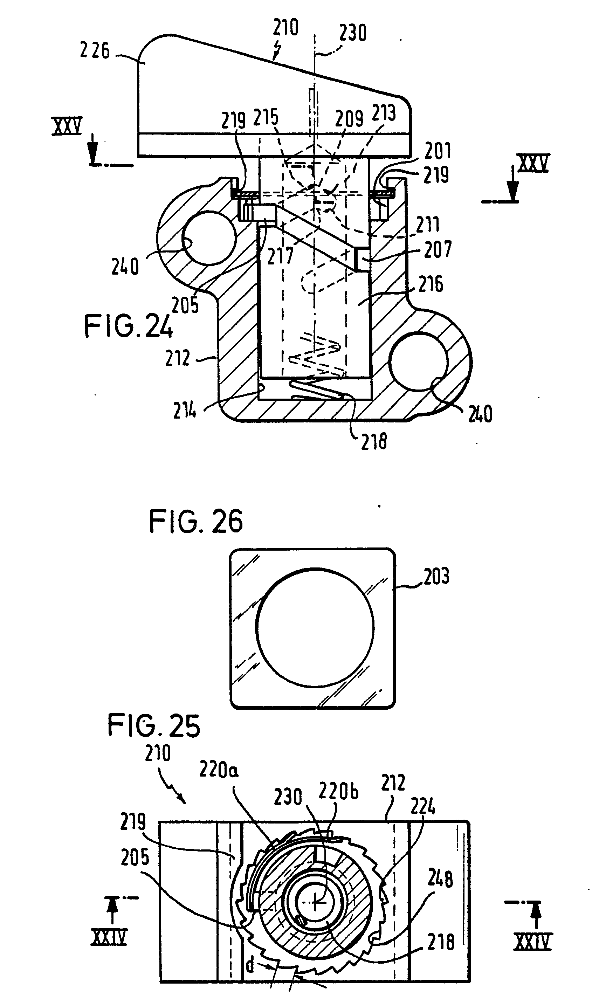

Fig. 24 bis 26 eine weitere Ausführungsform des Kettenspanners und zwar

Fig. 24 eine Vorderansicht im Schnitt nach Linie XXIV-XXIV in Fig. 25;

Fig. 25 einen Schnitt nach Linie XXV-XXV in Fig. 24 bei abgenommener Abdeckscheibe; und

Fig. 26 eine Einzeldarstellung der Abdeckscheibe;

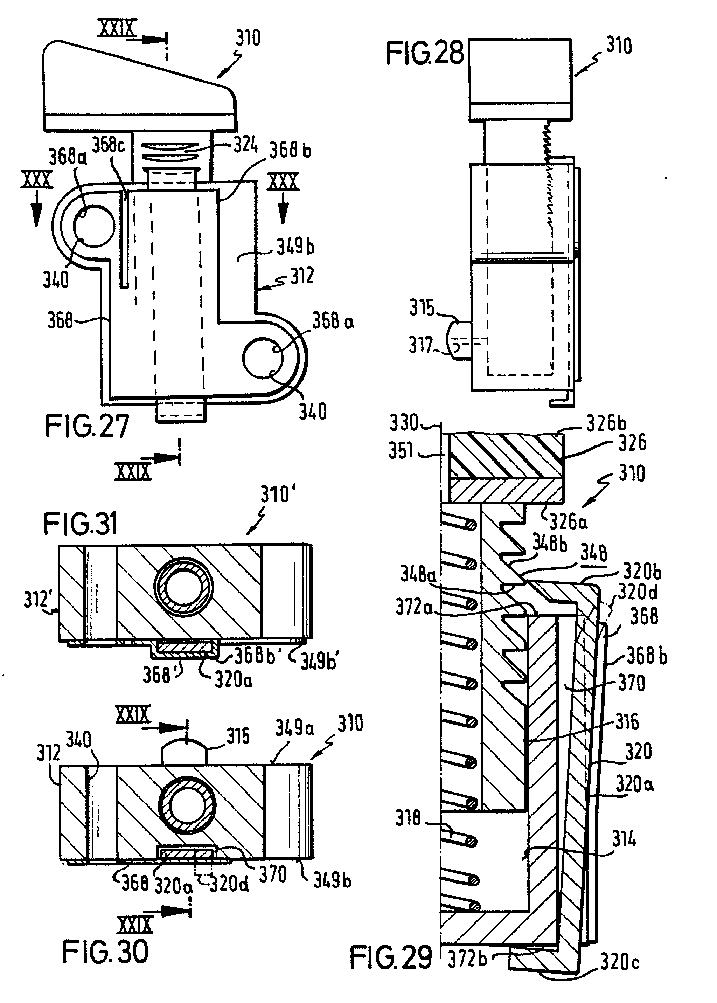

Fig. 27 bis 30 eine weitere Ausführungsform des Kettenspanners und zwar

Fig. 27 eine Vorderansicht;

Fig.28 eine Seitenansicht;

Fig. 29 eine teilweise seitliche Schnittansicht in vergrößertem Maßstab (Schnittlinien XXIX-XXIX in den Fig. 27 und 30); und

Fig. 30 einen Horizontalschnitt nach Linie XXX-XXX in Fig. 27;

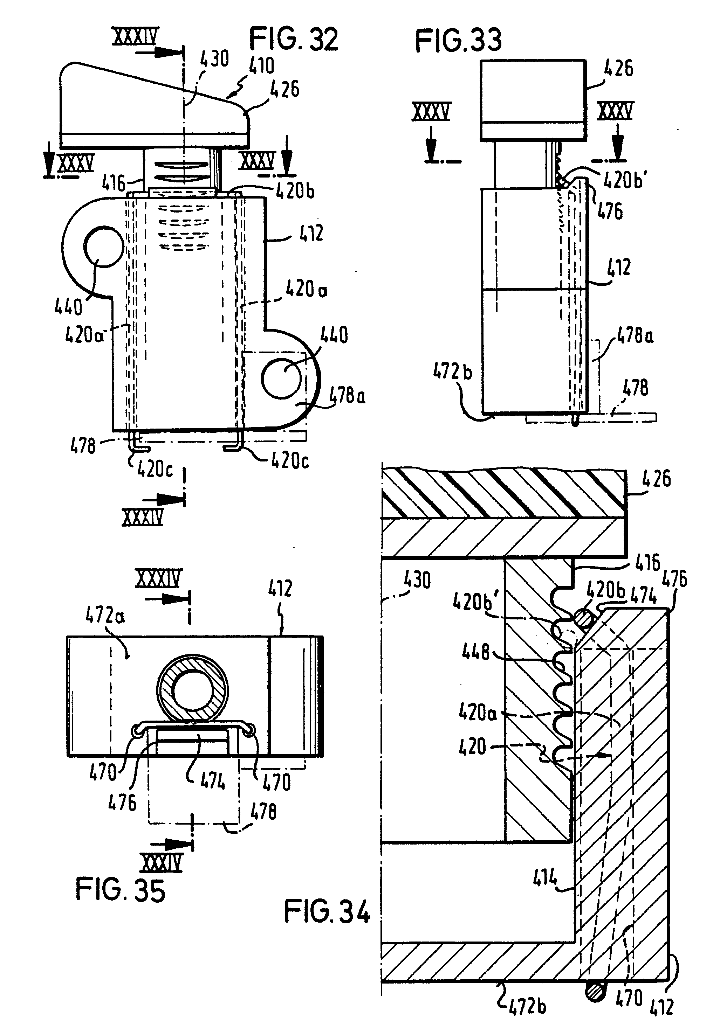

Fig. 31 einen Schnitt ähnlich Fig. 30 jedoch mit profilierter Blattfederführung des Bügels;

Fig. 32 bis 35 eine weitere Ausführungsform des Kettenspanners und zwar

Fig. 32 eine Vorderansicht;

Fig. 33 eine Seitenansicht;

Fig. 34 eine teilweise Seitenansicht in vergrößertem Maßstab im Schnitt nach Linie XXXIV-XXXIV in den Fig. 32 und 35; und

Fig. 35 einen Horizontalschnitt nach Linie XXXV-XXXV in den Fig. 32 und 33;

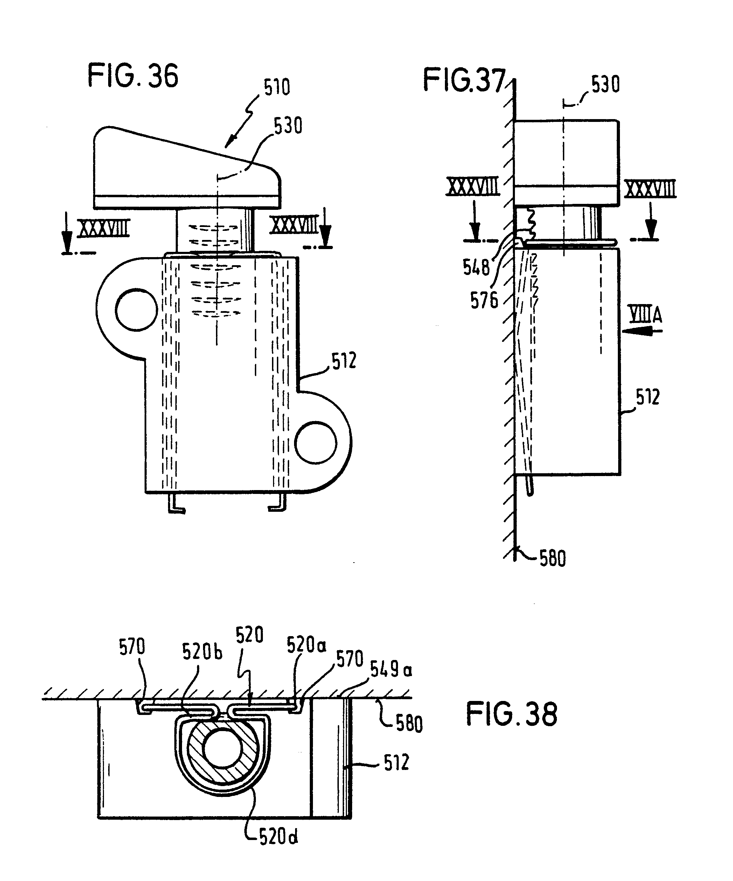

Fig. 36 bis 38 eine weitere Ausführungsform des Kettenspanners und zwar

Fig. 36 eine Vorderansicht;

Fig. 37 eine Seitenansicht; und

Fig. 38 einen Vertikalschnitt nach Linie XXXVIII-XXXVIII in den Fig. 36 und 37;

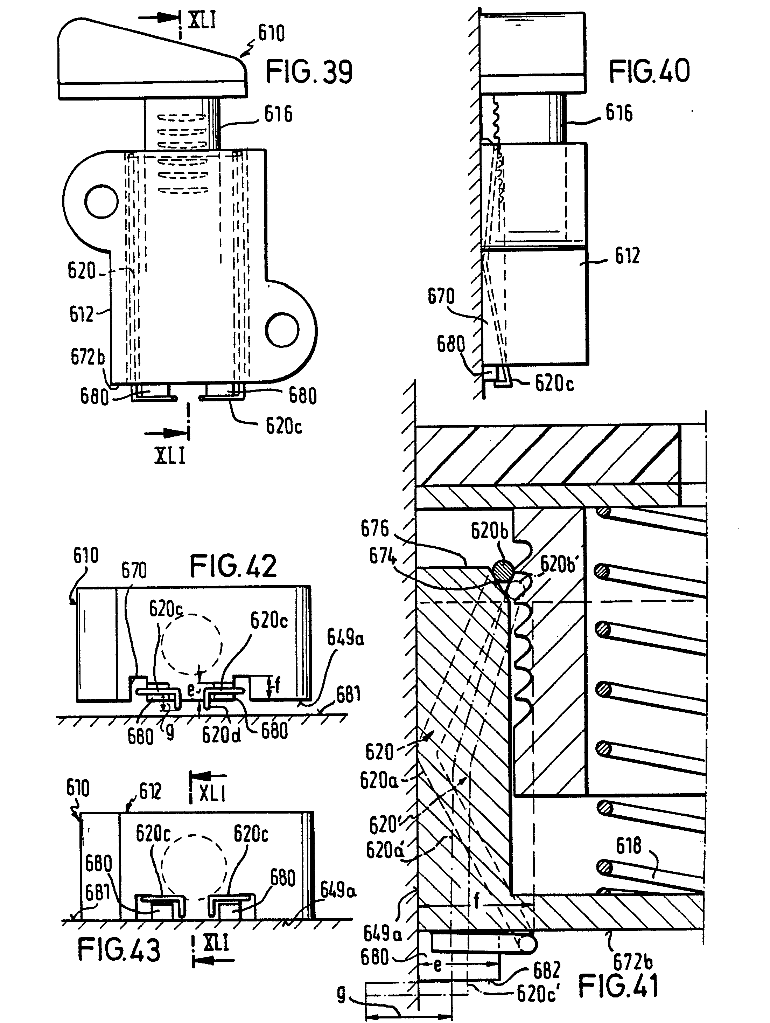

Fig. 39 bis 43 eine weitere Ausführungsform des Kettenspanners und zwar

Fig. 39 eine Vorderansicht;

Fig. 40 eine Seitenansicht;

Fig. 41 eine teilweise Seitenansicht in vergrößertem Maßstab im Schnitt nach Linie XXXXI-XXXXI in den Fig. 39 und 43;

Fig. 42 eine Unteransicht des Kettenspanners bei der Montage; und

Fig. 43 eine Unteransicht des Kettenspanners nach erfolgter Montage;

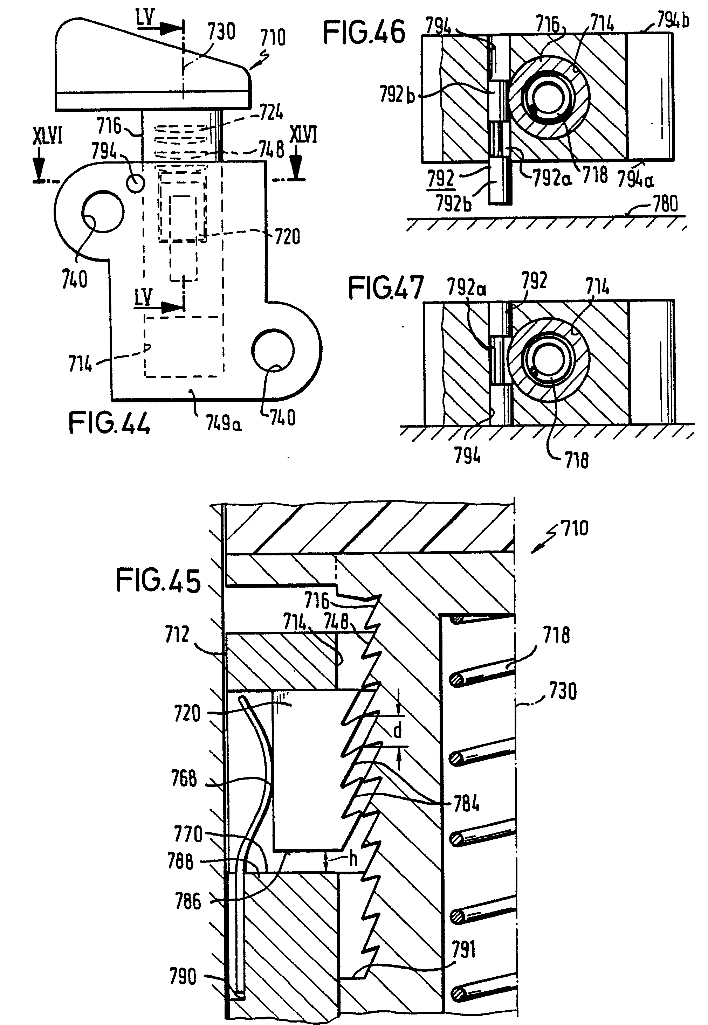

Fig. 44 bis 47 eine weitere Ausführungsform des Kettenspanners und zwar

Fig. 44 eine Vorderansicht;

Fig. 45 eine teilweise Seitenansicht im Schnitt nach Linie XLV-XLV in Fig. 44;

Fig. 46 einen Vertikalschnitt nach Linie XLI-XLI in Fig. 44 und zwar während der Montage;

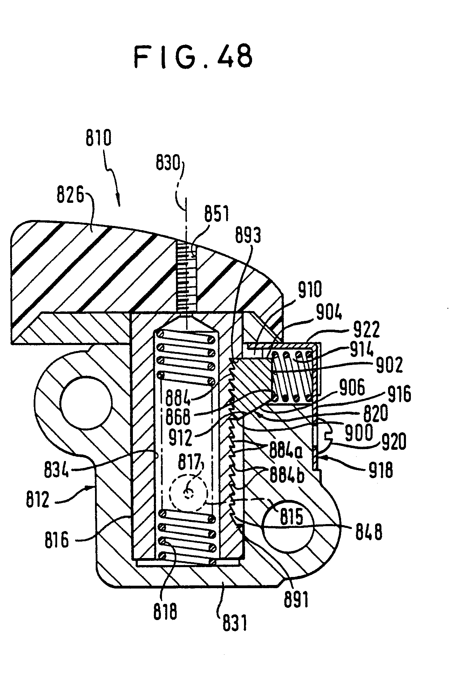

Fig. 47 einen Schnitt entsprechend Fig. 44, jedoch nach erfolgter Montage; und

Fig. 48 eine Vorderansicht im Schnitt einer letzten Ausführungsform.

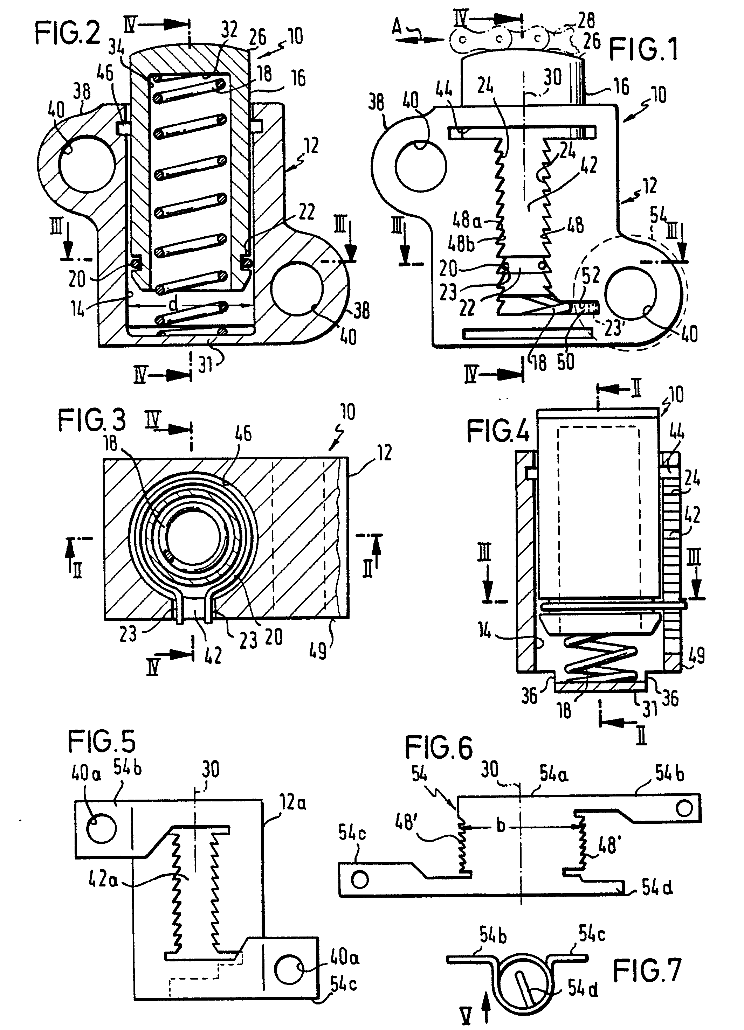

Der in den Fig. 1 bis 4 dargestellte Kettenspanner 10 besteht lediglich aus vier Teilen, nämlich einem Führungsgehäuse 12, einem in einer Kolbenbohrung 14 des Führungsgehäuses axial verschiebbar gelagerten Kolben 16, einer den Kolben in Ausfahrrichtung vorspannenden Schraubendruckfeder 18 sowie einem Sperrglied in Form einer Drahtfeder 20, welche in eine Kolbenumfangsnut 22 eingelegt ist und mit ihren radial nach außen abgebogenen Endabschnitten 23 an zwei einander gegenüberliegendenSperrflächen 24 angreift.

Das außerhalb des Führungsgehäuses 12 liegende Ende des Kolbens 16 ist als Spannerkopf 26 ausgebildet, welcher um eine zur Zeichenebene der Fig. 1 und 2 senkrechte Krümmungsachse konvex gekrümmt ist. Bei am vorgesehenen Träger montiertem Kettenspanner 10 drückt dieser Spannerkopf unter der Wirkung der Schraubendruckfeder 18 gegen die zu spannende Kette, welche in Fig. 1 mit unterbrochener Linie symbolisch angedeutet und mit 28 bezeichnet ist. Die Achse 30 des Kolbens 16, welche gleich der Gehäuseachse ist, liegt zum einen in der durch die Kettenschleife definierten Ebene und zum anderen im wesentlichen senkrecht zur Bewegungsrichtung der Kette (Doppelpfeil A in Fig. 1). Die die Kettennachspannung bewirkende Schraubendruckfeder 18 stützt sich zum einen gegen den Boden 31 der Kolbenbohrung 14 des Führungsgehäuses 12 ab und zum anderen gegen den Boden 32 einer vom inneren Kolbenende her in den Kolben 16 gebohrten sacklochartigen zentralen Bohrung 34. Diese Bohrung 34 ermöglicht den Einsatz einer relativ langen Schraubendruckfeder 18, was wiederum zur Folge hat, daß die relativen Änderungen der Federvorspannung in Abhängigkeit von der axialen Ausfahrstellung des Kolbens 16 innerhalb des Gehäuses 12 nicht allzu groß sind.

Der Boden 31 des Gehäuses 12 ist mit seitlichen Schlitzen 36 versehen (siehe z. B. Fig.

4), die ein Austreten von Metallspänen bei der Herstellung der Kolbenbohrung 14 erlauben. Das angenähert quaderförmige Gehäuse 12 ist an zwei gegenüberliegenden zur Achse 30 parallelen Längsseiten mit Ausbuchtungen 38 versehen, die mit durchgehenden Befestigungsbohrungen 40 ausgebildet sind. Diese Bohrungen dienen der Befestigung des Kettenspanners 10 am vorgesehenen Träger.

Wie insbesondere Fig. 1 zeigt, bilden die erwähnten Sperrflächen 24 die Längsränder einer in Richtung der Achse 30 länglich ausgebildeten Gehäusedurchbrechung 42, die in die Gehäusebohrung 14 einmündet. Die Durchbrechung 42 ist in Richtung der Achse 30 beidseits abgeschlossen, wobei jedoch am oberen, also am kettenspannerkopfseitigen Ende der Durchbrechung 42 ein in einer radialen Ebene liegender Einsetzschlitz 44 vorgesehen ist, welcher auf beiden Seiten über die Sperrflächen 24 vorsteht und dessen Länge dem Durchmesser d der Kolbenbohrung 14 entspricht zuzüglich der doppelten Nuttiefe einer in derselben Ebene wie der Schlitz 44 liegenden Teilumfangsnut 46 in der Kolbenbohrung 14. Der Einsetzschlitz 44 läuft demgemäß ausgehend von den beiden Sperrflächen 24 in radialer Ebene bis etwa zur entsprechenden Mittelebene (Schnittebene der Fig. 2), um sich dann in der halbkreisförmigen Teilumfangsnut 46 fortzusetzen.

Zum Einsetzen der gemäß Fig. 3 gebogenen Drahtfeder 20 ist diese lediglich bei aus dem Gehäuse 12 herausgezogenem Kolben 16 in den Einsetzschlitz 44 soweit einzuschieben, bis sie die Teilumfangsnut 46 ausfüllt. Nunmehr kann (nach vorherigem Einsetzen der Schraubendruckfeder 18) der Kolben 16 soweit eingeschoben werden, bis dessen Umfangsnut 22 auf gleicher Höhe wie die Teilumfangsnut 46 liegt. Daraufhin werden die beiden gemäß Fig. 3 geringfügig über die Vorderseite 49 des Führungsgehäuses 12 vorstehenden Endabschnitte 23 ergriffen und aufeinander zu bewegt, bis schließlich die Drahtfeder 20 die Teilumfangsnut 46 des Führungsgehäuses 12 verlassen hat und in die Umfangsnut 22 des Kolbens 16 eingedrungen ist. Drückt man nun den Kolben 16 nach innen, so kann dieser ungehindert nach einwärts geschoben werden, vorausgesetzt die Endabschnitte 23 werden weiterhin zusammengedrückt, so daß sie nicht an den Sperrflächen 24 hängenbleiben. Die Sperrflächen sind mit jeweils einer Sägezahnreihe 48 versehen, deren zur Zahnreihenlängsrichtung senkrechten Zahnflanken 48a dem spannerkopfnahen Ende der Zahnreihen zugewandt sind. Läßt man folglich z. B. in der in Fig. 1 dargestellten Position die Endabschnitte 23 los, so drücken diese unter der Vorspannkraft der gebogenen Drahtfeder 20 gegen die beiden Zahnreihen 48, wobei die Endabschnitte 23 jeweils zwischen aufeinanderfolgende Zähne zu gelangen versuchen. Wird nunmehr der Kolben 16 weiter in das Gehäuse 12 gedrückt, so schlagen die Endabschnitte 23 an die Zahnflanken 48a an und verhindern über den in der Kolbenumfangsnut 22 liegenden Abschnitt der Drahtfeder 20 ein weiteres Einfahren des Kolbens 16. Einer Ausfahrbewegung des Kolbens 16, beispielsweise aufgrund einer allmählichen Längung der zu spannenden Kette 28, setzt die aus der Drahtfeder 22 und den beiden Sperrflächen 24 bestehende Sperreinrichtung keinerlei Widerstand entgegen, da die Endabschnitte 23 längs der abgeschrägten Zahnflanken 48b gleiten können.

Bei der Montage des Kettenspanners 10 befindet sich der Kolben 16 zweckmäßigerweise in seiner inneren Endstellung innerhalb des Gehäuses 12, damit der Kolben 16 nicht in Kollision mit der ggf. bereits gespannten Kette 28 kommt. Es ist daher von Vorteil, daß der Kettenspanner 10 in einer Transport- und Montagestellung dem Monteur bereitsgestellt wird, in welcher Stellung der Kolben 16 in vollständig eingefahrener Position gehalten wird. Hierzu ist am in Fig. 1 unteren Ende der Durchbrechung 42 wiederum eine Erweiterungsnut 50 vorgesehen, welche jedoch im Gegensatz zur oberen Nut 44 nur an einer Seite der Unterbrechung, in radialer Ebene liegend, vorgesehen ist und zwar auf der Seite, auf der sich die untere der beiden Befestigungsbohrungen 40 befindet. Die Nut 50 reicht bis an die Bohrung 40 heran. Die in Fig. 1 oben gelegene Seitenwand 52 der Nut 50 liegt in zur Achse 30 radialer Ebene, so daß der in Fig. 1 rechte Endabschitt 23 ohne äußere Kraftwirkung nicht aus der Nut 50 austreten kann, wenn er durch entsprechend weites Eindrücken des Kolbens 16 in das Gehäuse 12 in die Nut 50 bewegt worden ist.

Bei der Montage des Kettenspanners 10 am vorgesehenen Träger werden die entsprechenden Befestigungsschrauben durch die Befestigungsbohrungen 40 geschoben und in den Träger eingeschraubt. Die in Fig. 1 strichliert angedeutete Befestigungsschraube 54 kann jedoch erst dann vollständig eingeschraubt werden, wenn der in der Nut 50 befindliche, über die Fläche 50 gemäß Fig. 3 vorstehende Endabschnitt 23 (in Fig. 1 punktiert angedeutet und mit 23' bezeichnet) aus der Nut 50 in den Bereich zwischen die Sperrflächen 24 geschwenkt wird, da sonst der Kopf der Befestigungsschraube 54 nicht zur vollständigen Anlage an der Fläche 49 gelangt. Es ist folglich sichergestellt, daß nach erfolgter Montage der Kolben 16 sich frei unter der Wirkung der Schraubendruckfeder 18 zum Nachspannen der Kette nach oben bewegen kann.

Da die Endabschnitte 23 von außen her ohne weiteres zugänglich sind, kann der Kolben 16 jederzeit von Hand entgegen der Sperrichtung bewegt werden; zur Lösung der Sperre sind lediglich die beiden Endabschnitte 23 aufeinander zu zubewegen.

Ein Auseinanderfallen von Kolben 16 und Führungsgehäuse 12, z. B. während des Transports oder bei übermäßiger Längung der

Ketten 28, ist ausgeschlossen, da die Endabschnitte 23 der Feder 20 nicht aus der Durchbrechung 42 herausgelangen können. Um in der oberen Endstellung des Kolbens 16 ein selbsttätiges Ausweichen der Drahtfeder 20 in die Teilumfangsnut 46 des Gehäuses 12 zu verhindern, ist lediglich erforderlich, daß die Feder 20 in ihrem entspannten Zustand einen lichten inneren Durchmesser aufweist, der im wesentlichen dem kleinsten Durchmesser der Kolbenumfangsnut 22 entspricht.

Während des vorgesehenen Betriebes fährt der Kolben 16 entsprechend der fortschreitenden Längung der Kette 28 langsam aus dem Gehäuse 12 heraus, wobei die Endabschnitte 23 längs der Zahnreihen 48 gleiten. Entsprechend der Kraft der Schraubendruckfeder 18 steht die Kette 28 unter ständiger Vorspannung. Bei momentan auftretenden Kettenkräften, die die Kraft der Schraubendruckfeder 18 übersteigen, kommt es zu kurzfristigen Einfahrbewegungen des Kolbens 16, wobei der Einfahrhub jedoch durch die Sperrwirkung der in die Sägezahnreihen sperrend eingreifenden Endabschnitte 23 begrenzt wird. Bei vollkommen starr mit dem Kolben 16 verbundenen Endabschnitten 23 würde der maximal zulässige Einfahrhub, abhängig von der momentanen axialen Ausgangsstellung des Kolbens 16, zwischen Null und dem Zahnabstand der Zahnreihen 48 liegen. Da die Endabschnitte 23 als Teil der Drahtfeder 20 jedoch elastisch federnd verformbar sind und zudem die Breite der Kolbenumfangsnut 22 geringfügig größer gewählt ist als die Dicke der Drahtfeder 20, ergibt sich ein zusätzlicher Beitrag zum Einfahrhub, der sicherstellt, daß der jeweils mögliche Einfahrhub einen bestimmten Wert nicht unterschreitet. Eine Laufunruhe der Kette 28, die bei zu geringem möglichen Einfahrhub zu Überspannungen und damit zu erhöhtem Verschleiß führen würde, kann somit vom Kettenspanner 10 abgefangen werden.

Das Führungsgehäuse 12 ist im Ausführungsbeispiel gemäß Fig. 1 bis 4 ein Druckgußkörper. In Fällen geringerer Beanspruchung kann jedoch auch ein kostengünstiger herstellbares Führungsgehäuse aus einem Blechteil eingesetzt werden, wie in den Fig. 5 bis 7 stark vereinfacht dargestellt ist. Man erkennt in der Abwicklung gemäß Fig. 6, daß das Blechteil 54 ein Blechteilmittelstück 54a aufweist, deren zur späteren Gehäuseachse 30 parallelen Längsränder jeweils mit einer Sägezahnreihe 48' versehen sind. Am in Fig. 6 oberen Ende des Mittelstücks 54a geht von diesem in Richtung senkrecht zur Achse 30 eine Verbindungslasche 54b aus (in Fig. 6 nach rechts) sowie dementsprechend am unteren Ende eine Verbindungslasche 54c, jedoch in entgegengesetzter Richtung. Die Abwicklung gemäß Fig. 6 zeigt die spätere Innenseite des Blechteils 54; zur Herstellung des Führungsgehäuses 12a gemäß Fig. 5 und 7 wird das Blechteil 54 um die Achse 30 im wesentlichen zylindrisch gebogen, wobei der Zylinderumfang die Breite b des Blechteilmittelstücks geringfügig überschreitet, so daß die beiden Sägezahnreihen 48' gemäß Fig. 5 voneinander beabstandet sind unter Bildung eines Zwischenraums 42a, der der Durchbrechung 42 gemäß Fig. 1, 3 und 4 entspricht. Die Befestigungslaschen 54b und 54c sind gemäß Fig. 7 in einer Ebene liegend voneinander weg gebogen; sie sind mit Befestigungslöchern 40a versehen zur Befestigung am vorgesehenen Träger. Die beiden Befestigungslappen schließen den Raum 42a in axialer Richtung nach oben und unten ab.

In den zylindrischen Innenraum des Führungsgehäuses 12a kann nun entsprechend dem vorstehend beschriebenen Ausführungsbeispiel gemäß Fig. 1 bis 4 ein Kolben eingesetzt werden samt Drahtfeder 20. Als Gegenlager für die Schraubendruckfeder dient eine nach innen umgebogene Stützlasche 54d, welche am unteren Ende des Blechteilmittelstücks 54a, der Befestigungslasche 54c gegenüberliegend, ausgeformt (siehe Fig. 6) und nach Bildung des zylindrischen Führungsgehäuses 12a radial nach innen umgebogen ist (siehe Fig. 7).

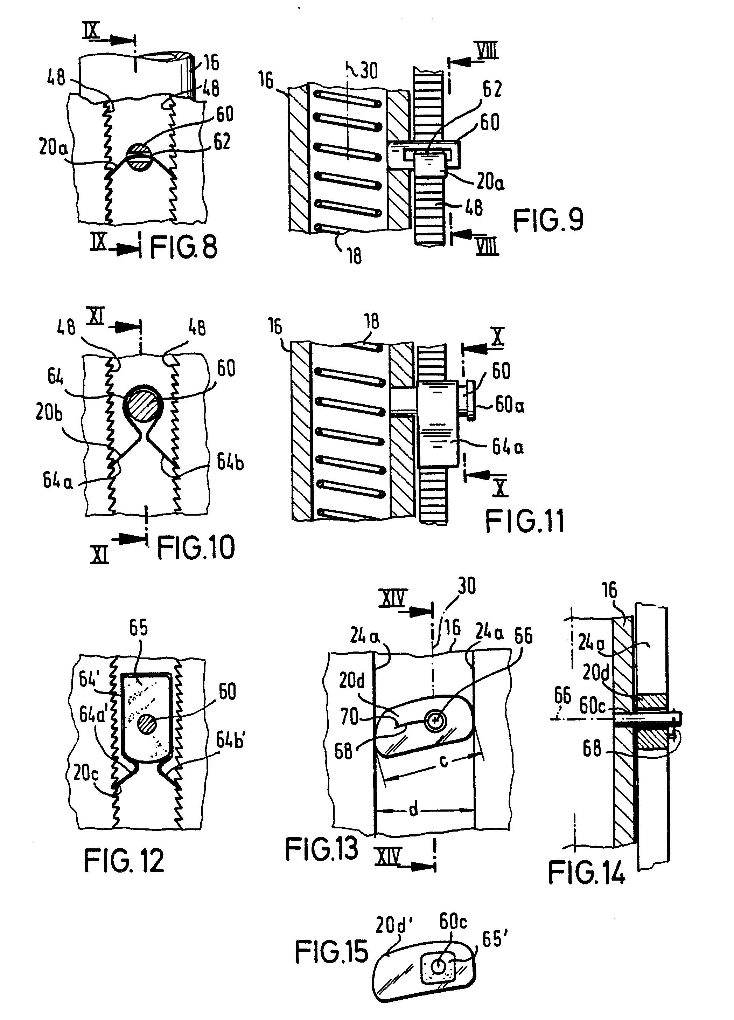

Anstelle der ringförmigen Drahtfeder 20 gemäß Fig. 1 bis 4, kann das Sperrglied auch andere Formen annehmen, von denen in den Fig. 8 bis 12 drei besonders bevorzugte angegeben sind. Gemäß Fig. 8 und 9 besteht das Sperrglied aus einer länglichen Blattfeder 20a, die im Bereich ihrer Längenmitte am Kolben 16 befestigt ist und zwar mittels eines an der Kolbenwand starr angebrachten, radial nach außen verlaufenden Stiftes 60, welcher mit einem den Stift in einer zur Achse 30 senkrechten Ebene durchsetzenden, die Blattfeder 20a aufnehmenden Längsschlitz 62 versehen ist. Die Länge der Blattfeder 20a ist etwas größer gewählt als der größte lichte Abstand zwischen den Zahnreihen 48. Um dennoch Platz zwischen den Zahnreihen 48 zu finden, ist die Blattfeder 20a um eine zur Achse 30 senkrechte Krümmungsachse gekrümmt, wobei die Blattfederenden in Richtung der Achse 30 auf der kettenspannerkoppfernen Seite des Stiftes 60 in die jeweilige Zahnreihe eingreifen. Daraus ergibt sich unmittelbar, daß der Kolben 16 zwar ungehindert ausfahren kann, jedoch nicht einfahren, da die Blattfederenden sogleich sperrend zwischen die Zähne der Zahnreihen 48 eingreifen.

Anstelle der einfach gebogenen Blattfeder 20a gemäß Fig. 8 und 9 kann auch eine mehrfach abgebogene, um den Stift 60 herumgelegte Blattfeder 20b eingesetzt werden, wie diese in den Fig. 10 und 11 dargestellt ist. Die Blattfeder 20b weist einen um den Stift 60 um einen Winkel von knapp unter 360° herumgebogenen Mittelabschnitt 64 auf sowie zwei von den beiden Enden des Mittelabschnitts schräg nach unten und außen (siehe Fig. 10) abgebogene Endabschnitte 64a und 64b. Um zu verhindern, daß der Mittelabschnitt 64 ungewollt vom Stift 60 radial nach außen abgleitet, ist am äußeren Stiftende ein durchmesservergrößerter Stiftkopf 60a vorgesehen. Es sei angemerkt, daß es bei einer Einfahrbewegung des Kolbens 16 zu einer zunehmenden Sperrkraft der Feder 20b kommt, da der Stift 60 keilartig die Endabschnitte 64 a, 64b auseinanderdrängt.

Um Schwingungen des Kolbens relativ zum Gehäuse wirksam dämpfen zu können, kann praktisch bei sämtlichen beschriebenen Ausführungsformen zwischen dem eigentlichen in die Sperrflächen eingreifenden Sperrglied und dem Kolben ein Gummielement in den Kraftfluß zwischengeschaltet werden, welches die erwünschte Schwingungsdämpfung herbeiführt. Dies sei exemplarisch an den Fig. 12 und 15 dargestellt. In Fig. 12 ist zwischen den kolbenstarren Stift 60 und die ähnlich den Fig. 10 und 11 gebogene Blattfeder 20c ein angenähert hülsenförmiges Gummieelement 65 zwischengeschaltet mit einer zylindrischen Aufnahmebohrung für den Stift 60 und einem angenähert rechteckigen Umriß, um welchen ein Mittelabschnitt 64' der Blattfeder 20c gebogen ist, an dessen beiden Enden sich die radial nach unten und außen abgebogenen Endabschnitte 64a' bzw. 64b' anschließen. Es ist ersichtlich, daß das Gummielement 65 zum einen den möglichen Einfahrhub des Kolbens 16 in das Führungsgehäuse 12 vergrößert und zum anderen die Relativbewegungen von Feder 20c und Stift 60 dämpft, was zu einer Dämpfung der Schwingungen des Kolbens 16 relativ zum Gehäuse führt.

In den Fig. 13 und 14 ist eine weitere Ausführungsform des erfindungsgemäßen Kettenspanners dargestellt, wobei wiederum lediglich ein Teilausschnitt entsprechend den Fig. 8 bis 12 gezeigt ist. Das Führungsgehäuse sowie den Kolben mit Spannerkopf kann man sich gemäß Fig. 1 bis 4 ergänzt denken.

Im Unterschied zu den vorstehend beschriebenen Ausführungsformen sind nunmehr die beiden einander zugewandten, zur Achse 30 parallelen Sperrflächen 24a als durchgehend ebene Flächen ausgebildet, welche zueinander parallel verlaufen. Das Sperrglied wird in diesem Falle von einem länglich ausgebildeten Klemmkörper 20d gebildet, welcher im Abstand von seinen beiden Längsenden, jedoch außermittig an einem am Kolben 16 starr befestigten, radial von diesem abstehenden Stift 60c angelenkt ist. Die Gesamtlänge c des Klemmkörpers 20d übersteigt geringfügig den lichten Abstand d beider ebenen Sperrflächen 24a; die durch den Stift 60c definierte Drehachse 66 befindet sich außerhalb der Längenmitte, d. h. sein Abstand, beispielsweise zu seinem in Fig. 13 rechten Ende beträgt weniger als c/2 (bevorzugt ca. 2c/5). Eine Vorspannfeder 68 durchsetzt mit ihrem in Fig. 13 rechten Ende eine Radialbohrung des Stiftes 60c; mit ihrem anderen Ende drückt sie an einen vom Klemmkörper 20d im Bereich von dessen linkem Ende abstehenden kleinen Stiftvorsprung 70. Die Feder 68 übt demnach ein Drehmoment im Uhrzeigersinn der Fig. 13 auf den Klemmkörper 20d aus, spannt diesen also in seine Klemmstellung vor. In dieser Klemmstellung liegen beide Endflächen des Klemmkörpers 20d reibungskraftschlüssig an den ebenen Sperrflächen 24a an, wobei eine zunehmende Selbsthemmung auftritt, wenn der Kolben 16 eingefahren, also in den Fig. 13 und 14 nach unten bewegt wird. Die Selbsthemmung rührt daher, daß das vom linken Hebelende ausgeübte Drehmoment aufgrund der größeren Hebelarmlänge das vom rechten Hebelende im Gegenuhrzeigersinn ausgeübte Drehmoment überwiegt. Hieraus resultiert, sofern noch möglich, eine weitere Verschwenkung des Klemmkörpers 20d im Uhrzeigersinn unter zunehmendem Andruck der beiden Klemmkörperenden gegen die ebenen Sperrflächen 24a.

Die Klemmung wird jedoch wiederum aufgrund der Hebellängenverhältnisse bei einer Ausfahrbewegung des Kolbens 16 sogleich wieder aufgehoben. Es ist ersichtlich, daß eine Klemmung in beliebigen axialen Ausfahrstellungen des Kolbens durch entsprechende Einfahrbewegung des Kolbens möglich ist.

Um auch bei dieser Ausführungsform einen begrenzten Einfahrhub aus einer Sperr- bzw. Klemmstellung des Kolbens zu erhalten unter gleichzeitiger Dämpfung entsprechender Schwingungsbewegungen ist gemäß einer weiteren Ausführungsform in Fig. 15 vorgesehen, zwischen dem Klemmkörper 20d' und dem Lagerstift 60c eine Gummihülse 65' einzusetzen.

Die Fig. 16 und 17 zeigen eine weitere, mit 110 bezeichnete Ausführungsform des Kettenspanners, die sich durch besonders einfachen und dabei mechanisch robusten Aufbau und niedrige Herstellungskosten auszeichnet. Die Sperrfläche 124 ist, in diesem Falle an einer Seitenfläche des Gehäuses 112 ausgebildet und zwar an der in Fig. 17 rechten Schmalseite 113, die senkrecht zur Montagefläche 149 verläuft. Gemäß Fig. 1 gehen von der Montagefläche zwei Befestigungsbohrungen 140 aus, die die entsprechenden Befestigungsschrauben aufnehmen. In den Fig. 16 und 17 erkennt man ferner einen von der Montagefläche 149 abstehenden Ölnippel 115, welcher mit einer in die Kolbenbohrung 114 einmündenden zentralen Bohrung 117 versehen ist. Bei montiertem Kettenspanner 110 wird Schmieröl durch die Bohrung 117 in die Bohrung 114 gepreßt, welches über die zentrale Bohrung 134 des nach unten hin offenen, hohlen Kolbens 116 und durch eine feine Bohrung 151 des Spannerkopfs 126 an die Spannerkopfoberseite 153 gelangt. Auf diese Weise kann die an der Oberseite 153 anliegende Kette kontinuierlich geschmiert werden. Bei entsprechend geringem Durchmesser der Bohrung 151 bzw. bei Wegfall dieser Bohrung kann der Druck des Öles auch zur Vorspannung des Kolbens 116 verwendet werden, zusätzlich oder anstelle einer in das Gehäuse eingesetzten, nicht dargestellten Schraubendruckfeder entsprechend der Feder 18 in den Fig. 1 bis 4.

Die Sperrfläche 124 ist entsprechend den Sperrflächen 24 in Fig. 1 mit einer Sägezahnreihe 148 versehen, wobei die einzelnen Zähne in Richtung der Gehäuse- und Kolbenachse 130 hintereinander gestaffelt sind, die Zähne selbst hierzu quer verlaufen und durch zur Achse 130 senkrechte, dem Spannerkopf 126 zugewandte Flankenflächen und zur Achse 130 geneigt verlaufende, vom Spannerkopf abgewandte flache Flächen gebildet sind. Am spannerkopfnahen Ende des Gehäuses endet die Sägezahnreihe 148 in einem über die einzelnen Sägezähne vorkragenden Vorsprung 153. Dieser verhindert ein Auseinanderfallen von Spannerkopf 126 und Führungsgehäuse 112, wie im folgenden noch erläutert werden wird.

Am Kolben 116 ist an der Unterseite des Spannerkopfs 126 anliegend ein Befestigungsabschnitt 120a einer als das Sperrglied dienenden, gebogenen Blattfeder 120 starr befestigt.

An diesen Abschnitt schließt sich ein den Vorsprung 153 sowie die Sperrfläche 124 wenigstens teilweise übergreifender Blattfederhauptabschnitt 120b an, welcher in einen zur Sperrfläche 124 schräg nach unten und einwärts gebogenen Endabschnitt 120c übergeht. Dieser greift unter Vorspannung stehend zwischen die Zähne der Zahnreihe 148 ein. Aufgrund der beschriebenen Neigung der Zahnflanken ergibt sich die gewünschte Sperrwirkung, nämlich bei einer Einfahrbewegung des Kolbens 116 in das Gehäuse 112. Bei einer Längung der Kette fährt der Kolben 116 unter der Vorspannkraft des Drucköls bzw. der Schraubendruckfeder zunehmend nach außen, so daß die am Spannerkopf 126 anliegende Kette stets eine gewisse Kettenspannung aufweist. Auch dann, wenn bei einer vorangegangenen Kettenlängung der Endabschnitt 120c gerade oberhalb eines Zahnes eingerastet ist, besteht aufgrund der elastischen Deformierbarkeit des Mittelabschnitts 120b die Möglichkeit eines gewissen Einfahrhubs des Kolbens 116 bei in dieser Situation auftretender Laufunruhe des Kettenantriebs. Wäre diese Möglichkeit nicht gegeben, so würden hohe Kettenspannungen auftreten, die sowohl Beschädigungen des Kettenantriebs als auch des Kettenspanners 110 zur Folge haben könnten.

Ein Auseinanderfallen von Führungsgehäuse 112 und Kolben 116 mit Spannerkopf 126 verhindert, wie bereits erwähnt, der Vorsprung 153, da vor dem Auseinanderfallen der Endabschnitt 120c am Vorsprung 153 anschlägt und die Vorspannkraft des Kolbens (Öldruck und/oder Schraubendruckfeder) nicht ausreicht, um die Blattfeder 120 soweit aufzubiegen, daß der Endabschnitt 120c am Vorsprung 153 vorbeigelangen kann.

Von Vorteil ist auch, daß die Blattfeder 120 von außen her zugänglich ist, so daß im Bedarfsfalle der mehr oder weniger ausgefahrene Kolben 116 auch wieder vollständig eingefahren werden kann. Hierzu muß man lediglich die Blattfeder 120 dementsprechend aufbiegen und den Kolben 116 einwärts schieben.

Der Kettenspanner 110' gemäß Fig. 18 unterscheidet sich vom Kettenspanner 110 gemäß Fig. 16 und 17 im wesentlichen dadurch, daß die Zahnreihe 148' nunmehr an einer dem Kolben 116' zugewandten Seitenfläche angeordnet ist und zwar an einem parallel zur Achse 130' verlaufenden, gegenüber dieser seitlich versetzten Vorsprung 155 des Führungsgehäuses 112'. Dementsprechend kann auch die Blattfeder 120' vereinfacht ausgebildet sein, nämlich als im wesentlichen ebene, zur Achse 130' senkrechte Blattfeder, die in Fig. 18 im Schnitt dargestellt ist. Man erkennt, daß die Blattfeder 120' in eine Umfangsnut 157' des Kolbens 116' eingesetzt ist; der zum Eingriff in die Sägezahnreihe 148' bestimmte Rand 120c' ist geringfügig nach unten umgebogen um den Gleitwiderstand zwischen dem Rand und der Sägezahnreihe 148' bei einer Ausfahrbewegung des Kolbens 116' zu verringern. Bei einer Einfahrbewegung des Kolbens 116' sperrt die Blattfeder 120', wobei aufgrund der federnden Nachgiebigkeit der Blattfeder 120' ein gewisser Einfahrhub möglich ist. Dennoch sperrt die Blattfeder 120' den Kolben 116' zuverlässig selbst bei höheren Einfahrkräften, da sie bei größeren Einfahrkräften an der Unterseite des Spannerkopfs 126' anliegt und somit weitere Verformungen der Blattfeder 120' stark eingeschränkt sind.

Die Fig. 19 bis 22 zeigen eine weitere Ausführungsform 110'', welche in ihrem prinzipiellen Aufbau dem Kettenspanner 110 gemäß Fig. 16 und 17 gleicht. Auch hier ist am Führungsgehäuse 112'' eine vom Kolben 116'' abgewandte Sperrfläche 124'' mit Sägezahnreihe 148'' vorgesehen, mit dem Unterschied, daß die Sperrfläche 124'' keine Seitenfläche des Führungsgehäuses sondern eine gleich orientierte Nutseitenwand einer Gehäusenut 159 ist. Dies hat den Vorteil, daß sichergestellt ist, daß der Endabschnitt 120c'' des in diesem Falle als Drahtbügel 120'' ausgebildeten Sperrglieds eine gewisse Führung erfährt und auf jeden Fall ein versehentliches Wegbiegen von der Sägezahnreihe 148'' im wesentlichen ausgeschlossen ist.

Wie insbesondere Fig. 21 zeigt, ist der erwähnte Endabschnitt 120c'' rechtwinklig vom Mittelabschnitt 120b'' abgebogen, welcher letzterer an der Gehäuseaußenseite parallel zur Gehäuseachse 130'' verläuft. Der Mittelabschnitt 120b'' wird im Bereich der Unterseite des Spannerkopfs 126'' durch den Befestigungsabschnitt 120a'' fortgesetzt, welcher gemäß Fig. 22 den Kolben 116'', eingelegt in eine Kolbenumfangsnut 161, umgreift und hierdurch am Kolben 116'' starr befestigt ist.

Es kommen auch andere Befestigungsarten des Drahtbügels 120'' am Kolben 116'' in Frage, vorzugsweise die in Fig. 23 gezeigte, bei der der Befestigungsabschnitt 120a''' den Kolben 116'''' in radialer Richtung quer durchsetzt und am Bügelende zur Verlustsicherung umgebogen ist.

In den Fig. 24 bis 26 ist eine weitere, mit 210 bezeichnete Ausführungsform des Kettenspanners dargestellt. Im Unterschied zu den vorstehend beschriebenen Ausführungsformen, folgt hier die Sperrfläche 224 mit ihrer Sägezahnreihe 248 einer zur Gehäuse- und Kolbenachse 230 zentrischen Kreislinie. Hierzu ist am spannerkopfnahen Ende der Kolbenbohrung 214 des Führungsgehäuses 212 ein durchmesservergrößerter Einstich 201 ausgeformt, welcher nach außen hin (in Fig. 24 nach oben hin) durch eine in der Darstellung der Fig. 25 weggelassene, vom Kolben 216 durchsetzte Scheibe 203 abgedeckt ist. Die Innenseite des Einstichs 201 ist gemäß Fig. 25 mit der Zahnreihe 248 versehen, wobei die Zähne in Umfangsrichtung hintereinander gestaffelt sind und die Zahnflanken der Zähne abwechselnd angenähert senkrecht zur Umfangsrichtung und zur Umfangsrichtung geneigt angeordnet sind (siehe Fig. 25).

Das in die Sägezahnreihe 248 eingreifende Sperrglied ist im vorliegenden Falle zweiteilig und besteht aus zwei Blattfedern 220a und 220b, welche gemeinsam mit jeweils einem ihrer Enden an einem Gleitstück 205 befestigt sind. Die beiden Blattfedern 220a und 220b gehen vom Gleitstück 205 in derselben Richtung aus (in Fig. 25 im Uhrzeigersinn) haben jedoch unterschiedliche Länge. Man erkennt in Fig. 25, daß die außen liegende Blattfeder 220a mit ihrem geringfügig radial nach außen umgebogenen freien Ende derart zwischen zwei Zähnen eingreift, daß eine Bewegung der Federn 220a und 220b samt Gleitstück 205 in Umfangsrichtung im Uhrzeigersinn der Fig. 25 ausgeschlossen ist. Das entsprechend abgebogene Ende der anderen Blattfeder 220b befindet sich in diesem Moment gerade in der Mitte zwischen zwei Zahnköpfen. Demzufolge rastet diese Blattfeder bei einer Bewegung der Blattfedern und des Gleitstücks im Gegenuhrzeigersinn um den halben Sägezahnabstand d/2 ein und sperrt die Bewegung in der entgegengesetzten Richtung. Damit entspricht diese Anordnung einer herkömmlichen Anordnung mit einer Zahnreihe mit halbem Zahnabstand und einem einzigen in die Zahnreihe eingreifenden Sperrteil. Der Vorzug der beschriebenen Anordnung mit zwei oder mehreren gegeneinander entsprechend versetzten, in die Sägezahnreihe eingreifenden Sperrgliedteilen liegt darin, daß bei vorgegebenem Abstand aufeinanderfolgender Raststellungen eine entsprechend gröbere Verzahnung der Sägezahnreihe verwendet werden kann, welche kostengünstiger herstellbar ist und geringeren Verschleiß aufweist. Im dargestellten Beispiel mit zwei Blattfedern 220a und 220b ist die Länge des die beiden Federenden verbindenden Umfangsbogens gleich dem $(2n+1)/2$-fachen des Zahnabstands d mit $n = 0,1,2,3,...$ (hier $n = 2$).

Diese Art der feineren Unterteilung der Sperrstellungen bei vorgegebenem Zahnabstand läßt sich ohne weiteres auch bei linearen Zahnreihen anwenden, wie diese bei den übrigen in dieser Anmeldung beschriebenen Ausführungsformen gegeben sind.

Zur Umsetzung der Axialbewegung des Kolbens 216 in eine Kreisumfangsbewegung des Gleitstücks 205 ist dieses zum einen im Einstich 201 in Umfangsrichtung beweglich gelagert, jedoch in axialer Richtung durch die Abdeckscheibe 203 festgelegt und zum anderen in eine Spiralnut 207 am Außenumfang des Kolbens 216 längs der Nut beweglich eingesetzt. Wie Fig. 24 zeigt, beginnt die Spiralnut 207 mit Abstand vom kolbenspannerfernen Ende des Kolbens, was ein Auseinanderfallen von Führungsgehäuse 212 und Kolben 216 samt Spannerkopf 226 unter der Wirkung der Schraubendruckfeder 218 verhindert. Der spannerkopfnahe Endbereich 209 der Spiralnut 207 ist in Richtung zum anderen Ende der Spiralnut hin abgebogen. In der Transport- und Montagestellung des Kolbens 216, in welcher dieser fast vollständig in das Führungsgehäuse 212 eingefahren ist, befindet sich das Gleitstück 205 im Endbereich 209, wobei es unter der Wirkung der Schraubendruckfeder 218 an der zum spannerkopffernen Ende hin gewölbten spannerkopffernen Nutseitenwand 211 anliegt. Dies ist ein stabiler Zustand, der solange beibehalten wird, bis, nach erfolgter Montage des Führungsgehäuses 12 am vorgesehenen Träger, von Hand oder von der am Spannerkopf 226 anliegenden, nicht dargestellten Kette der Spannerkopf 226 zum Führungsgehäuse 212 hin gedrückt wird. Hierauf gelangt das Gleitstück 205 an die gegenüberliegende spannerkopfnahe Nutseitenwand 213, an der das Gleitstück entlanggleitet, bis es die Knickstelle 215 dieser Nutseitenwand 213 erreicht. Hierbei hat sich das Gleitstück 205 im Gegenuhrzeigersinn der Fig. 25 in Umfangsrichtung bewegt. Wird nun der Spannerkopf 226 von äußeren Kräften entlastet, so schiebt die Schraubendruckfeder 218 den Kolben aus, wobei das Gleitstück 205 wiederum zur Anlage an der spannerkopffernen Nutseitenwand 211 gelangt. Da die entsprechende Knickstelle 217 der spannerkopffernen Seitenwand 211 im Uhrzeigersinn der Fig. 25 geringfügig gegenüber der Knickstelle 215 versetzt ist, gelangt das Gleitstück 205 nunmehr zur Anlage an den sich an die Knickstelle 217 im Gegenuhrzeigersinn der Fig. 25 anschliessenden, bis zum anderen Nutende führenden Abschnitt der Nutseitenwand 211. Die Verriegelung des Kolbens 216 in seiner Transport- und Montagestellung ist demzufolge beseitigt.

Mit zunehmender Kettenlänge bewegt sich der Kolben 216 aus dem Gehäuse 212 heraus, wobei das Gleitstück 205 im Gegenuhrzeigersinn der Fig. 25 innerhalb des Einstichs 201 gleitet unter ständigem Eingriff in die Spiralnut 207 des Kolbens 216. Die Blattfedern 220a und 220b gleiten ungehindert entlang der Sägezahnreihe 248.

Die Kette wird folglich ständig mittels des Kettenspanners 210 nachgespannt. Um zu verhindern, daß bei größerer Kettenlängung unter Umständen die volle Kettenlänge zur Verfügung steht, wenn Kettenkräfte auftreten, die ausreichen, die Kraft der Schraubendruckfeder 218 zu überwinden, ist die von der Sägezahnreihe 248 und den in diese eingreifenden Blattfedern 220a und 220b gebildete Sperreinrichtung vorgesehen. Diese verhindert in sämtlichen Ausfahrstellungen des Kolbens 216 eine größere Einfahrbewegung. Um jedoch auch dann, wenn gerade eine der Blattfedern 220a, 220b eingerastet ist, einen gewissen Einfahrhub sicherzustellen, der übermäßigen Verschleiß des Kettenantriebs und des Kettenspanners bei Laufunruhe des Kettenantriebs verhindert, ist das Gleitstück 205 mit axialem Spiel innerhalb des Einstichs 201 gelagert. Anstelle oder zusätzlich zu diesem Spiel kann auch, wie in Fig. 24 dargestellt, die Breite der Spiralnut 207 etwas größer als die entsprechende Dimension des Gleitstücks 205 sein, so daß man hier wiederum ein Axialspiel erhält.

Zu den Fig. 24 und 25 ist noch nachzutragen, daß das Führungsgehäuse 212 mit Befestigungsbohrungen 240 versehen ist entsprechend den Bohrungen 40 gemäß Fig. 1 und 2.

Der Zusammenbau des Kettenspanners 210 ist schnell und einfach durchzuführen. Hierzu wird zuerst die Scheibe 203 auf den Kolben 216 aufgeschoben und anschließend das mit den Blattfedern 220a und 220b versehene Gleitstück 205 in die Spiralnut 207 eingesetzt. Dann wird der Kolben 216 in die Kolbenbohrung 214 des Führungsgehäuses 212 eingeschoben, bis das Gleitstück 205 in den Einstich 201 gelangt. Anschließend werden zwei einander gegenüberliegende Seiten der quadratischen Scheibe 203 geringfügig nach unten abgebogen und in entsprechende Aufnahmenuten 219 des Führungsgehäuses 212 oberhalb des Einstichs 201 eingefügt.

Anstelle der Scheibe 203 kann auch ein Segerring oder dergl. zur Abdeckung des Einstichs 201 verwendet werden.

Den im folgenden zu beschreibenden Ausführungsformen des Kettenspanners ist gemeinsam, daß die die Sägezahnreihe aufweisende Sperrfläche nunmehr am Kolbenumfang, in axialer Richtung verlaufend, vorgesehen ist.

Die in den Fig. 27 bis 30 gezeigte Ausführungsform 310 des Kettenspanners besteht entsprechend den vorstehend beschriebenen Ausführungsbeispielen aus dem Führungsgehäuse 312 mit zwei Befestigungslöchern 340 und einer Kolbenbohrung 314, einem in der Kolbenbohrung 314 axial verschiebbaren Kolben 316 und einem Spannerkopf 326 am äußeren Kolbenende. Im dargestellten Beispiel ist der Kolben 316 durchgehend hohl ausgebildet und nimmt eine Schraubendruckfeder 318 auf, die den Kolben 316 nach außen hin vorspannt. An ihrem in Fig. 29 oberen Ende stützt sich die Feder 318 an einer in radialer Ebene liegenden Stützplatte 326a des Spannerkopfs ab. An der Außenseite der Stützplatte 326a wiederum ist ein angenähert keilförmiger, abgerundeter Gummikörper 326b angebracht, an welchem die nicht dargestellte Kette während des Betriebes anliegt. Um eine automatische Kettenschmierung zu erhalten, kann auch bei dieser Ausführungsform ein zentraler Kanal 351 durch den Spannerkopf 326 hindurch verlaufen, der die Kolbenbohrung 314 über den hohlen Kolben 316 mit der Oberseite des Gummikörpers 326b verbindet. Die Schmierölzuführung in die Kolbenbohrung 314 kann über einen in den Fig. 28 und 30 angedeuteten, an einer Seitenfläche des Gehäuses abstehenden Schmiernippel 315 erfolgen, dessen zentrale Bohrung 317 in die Kolbenbohrung 314 führt.

Die Sperrfläche 324 mit der Sägezahnreihe 348 ist insbesondere in Fig. 29 klar erkennbar. Um dieselbe Sperrichtung (Einfahrbewegung des Kolbens 316) zu erhalten, wie bei den übrigen beschriebenen Ausführungsbeispielen, werden die einzelnen Zähne von Zahnflanken 348a und Zahnflanken 348b gebildet, wobei die Zahnflanken 348a vom Spannerkopf 326 abgewandt sind und in einer zur Gehäuse- und Kolbenachse 330 radialen Ebene liegen und wobei die Zahnflanken 348b zur Achse 330 geneigt verlaufen und dem Spannerkopf 326 zugewandt sind.

Das Sperrglied wird von einem Sperrbügel 320 gebildet, welcher im wesentlichen formsteif ausgebildet ist und einen achsparallelen, länglichen Mittelabschnitt 320a aufweist, an dessen beiden Enden nach Art einer U-Form jeweils ein Endabschnitt senkrecht auf die Achse 330 hin umgebogen ist. Der spannerkopfnahe (obere in Fig. 29) Endabschnitt bildet den Eingriffsabschnitt 320b, der andere Endabschnitt den Anschlagsabschnitt 320c. Der zum Eingriff in die Sägezahnreihe 348 vorgesehene Eingriffsabschnitt 320b ist an seiner Innenseite entsprechend den Zahnflanken 348b abgeschrägt. Der Mittelabschnitt 320a ist in eine achsparallele Gehäusenut 370 eingesetzt, welche an einer der Montageseitenfläche 349a gegenüberliegenden Seitenfläche 349b des Führungsgehäuses 312 vorgesehen ist und nach außen hin offen ist. Zwischen den beiden Flächen 349a und 349b verlaufen die Befestigungsbohrungen 340. Der lichte Abstand zwischen den beiden Abschnitten 320b und 320c ist etwas größer gewählt als die axiale Länge des Führungsgehäuses 312 in diesem Bereich. Der Sperrbügel 320 ist demnach in axialer Richtung entsprechend dieser Längendifferenz axial hin- und herbewegbar zwischen einer unteren Anschlagsstellung, in der der Eingriffsabschnitt 320b an der oberen Stirnfläche 372a des Führungsgehäuses 312 im Bereich der Nut 370 anschlägt, und einer oberen Endstellung, in der der Anschlagsabschnitt 320c an der entsprechenden unteren Gehäusestirnfläche 372b anschlägt.

An der mit der Nut 370 versehenen Seitenfläche 349b des Führungsgehäuses 312 ist eine Blattfeder 368 flächig angebracht, deren Umriß die Fig. 27 zeigt. Gemäß Fig. 29 deckt die Blattfeder 368 die Nut 370 ab. Die Blattfeder 368 folgt mit geringem Abstand dem Umriß der Seitenfläche 349b und weist mit den Befestigungslöchern 340 des Führungsgehäuses 312 fluchtende Löcher 368a auf. Vom spannerkopfnahen (oberen) Rand der Blattfeder 368 aus in einem Bereich zwischen dem oberen Loch 368a und der Nut 370 ist ein Einschnitt 368c in axialer Richtung bis etwa auf halbe Blattfederhöhe in der Blattfeder 368 ausgeformt, um auf diese Weise einen den Bügel 320 abdeckenden Federabschnitt 368b zu erhalten, welcher in definierter Weise an seinem oberen Ende von der Fläche 349 weg abbiegbar ist, wie in Fig. 29 dargestellt ist.

Bei einer Ausfahrbewegung des Kolbens 316 wird der Eingriffsabschnitt 320b des Bügels 320 von den schrägen Zahnflanken 348b immer wieder in Richtung weg vom Kolben 316 nach außen geschoben, wobei durch den Federabschnitt 368b ein zunehmender Gegendruck erzeugt wird. Nach Vorbeilauf eines Sägezahns rastet der Eingriffsabschnitt 320b unter dieser Federwirkung in den nächstfolgenden Zahnzwischenraum ein.

Bei einer aus einer beliebigen axialen Stellung des Kolbens 316 erfolgenden momentanen Einfahrbewegung des Kolbens 316 gelangt schließlich die radiale Zahnflanke 348a des nächsten Zahnes oberhalb der Oberseite des Eingriffsabschnitts 320b zur Anlage an dieser Oberseite; der Kolben 316 nimmt daraufhin den Eingriffsabschnitt 320b bei seiner Einfahrbewegung mit, wobei diese Einfahrbewegung gestoppt wird, sobald der Eingriffsabschnitt 320b mit seiner Unterseite an der erwähnten Stirnfläche 372a des Führungsgehäuses anschlägt. Man erhält somit die gewünschte Sperrung der Einfahrbewegung unter Beibehaltung eines gewissen Einfahrhubs.

In der in Fig. 31 dargestellten Ausführungsform 310' des Kolbenspanners wird der Mittelabschnitt 320a des Sperrbügels 320 in einer durch eine entsprechende Prägung der Blattfeder 368' gebildeten Nut der Blattfeder geführt. Dabei liegt die dem Führungsgehäuse zugewandte Innenseite des Mittelabschnitts 320a an der durchgehend eben ausgebildeten Seitenfläche 349b' des Führungsgehäuses 312' flächig an. Um auch in diesem Falle einen nach außen hin abbiegbaren Blattabschnitt 368b' zu erhalten, ist die Blattfeder 368' in nicht dargestellter Weise in ihrem oberen Bereich beidseits des Bügels 320 geschlitzt.

Zur Erhöhung der rücktreibenden Kraft des entsprechenden Federabschnitts 368b bzw. 368b' kann, wie in den Fig. 29 und 30 angedeutet ist, am oberen Ende des Mittelabschnitts 320a ein seitlicher, strichpunktiert angedeuteter Blechlappen 320d nach außen hin abgebogen sein, der die Federauslenkung bei gegebener Schwenklage des Bügels 320 vergrößert.

In den Fig. 32 bis 35, 36 bis 38 und 39 bis 43 sind drei weitere Ausführungsformen des Kettenspanners dargestellt, deren prinzipieller Aufbau und Funktionsweise dem vorstehend beschriebenen Kettenspanner 310 gemäß Fig. 27 bis 31 entspricht. Anstelle des starren, U-förmigen Sperrbügels 320 wird jedoch ein besonders kostengünstig herstellbarer Drahtbügel verwendet.

Bei der mit 410 bezeichneten Ausführungsform des Kettenspanners gemäß Fig. 32 bis 35 sind im Führungsgehäuse 412 zur Gehäuse- und Kolbenachse 430 parallelverlaufende Führungsbohrungen 470 vorgesehen, die das Führungsgehäuse 412 über dessen Gesamtlänge durchsetzen. Der Drahtbügel 420 ist im wesentlichen U-förmig gebogen mit einem den Eingriffsabschnitt 420b bildenden Mittelabschnitt und zwei in die beiden Führungsbohrungen 470 eingesetzten, den Mittelabschnitt (entsprechend dem Mittelabschnitt 320 gemäß Fig. 29) bildenden Seitenschenkeln 420a. Zur Bildung des Anschlagsabschnittes entsprechend dem Anschlagsabschnitt 320c in Fig.29) sind die beiden Bügelendbereiche 420c an den unteren Enden der Seitenschenkeln 420a (siehe Fig. 32) aufeinander zu laufend rechtwinklig umgebogen.

Die beiden Seitenschenkel 420a innerhalb ihrer Führungsbohrungen 470 sind zur Herstellung einer Vorspannung vorgebogen um eine zum Abstand zwischen beiden Seitenschenkeln 420a parallele Krümmungsachse mit Wölbung nach außen hin weg vom Kolben 416. Demzufolge wirkt auf den Eingriffsabschnitt 420b eine ständige Vorspannung, die diesen Eingriffsabschnitt 420b in Eingriff mit der Zahnreihe 448 am Außenumfang des Kolbens 416 zu bewegen versucht. Die Sägezähne der Sägezahnreihe 448 entsprechen in der Neigung der Zahnflanken der Sägezahnreihe 348 gemäß Fig. 29 mit dem einen Unterschied, daß der Zahngrund in Anpassung an den Kreisquerschnittsdurchmesser des Drahtbügels 420 abgerundet ist. Der Drahtbügel 420 übt dementsprechend eine Sperrwirkung auf den Kolben 416 aus, sobald dieser in das Führungsgehäuse 412 eingeschoben wird. Hierbei kann der Kolben stets einen vorgegebenen begrenzten Einfahrhub durchführen und zwar deshalb, weil der Eingriffsabschnitt 420b bei dieser Einfahrbewegung aus seiner in Fig. 34 dargestellten Freigabestellung in seine in Fig. 33 dargestellte und in Fig. 34 punktiert angedeutete Eingriffsstellung 420b' bewegt werden muß und zwar aufgrund einer Führungsfläche 474 eines an der in den Fig. 32 bis 34 oberen Stirnfläche des Führungsgehäuses 412 im Bereich zwischen den Führungsbohrungen 470 am Gehäuse vorgesehenen Axialvorsprungs 476. Gemäß dem Schnitt der Fig. 34 geht die Führungsfläche 474 vom oberen Ende der Kolbenbohrung 414 aus und verläuft in Fig. 33 schräg nach oben und weg vom Kolben 416. Wird bei einer Einfahrbewegung des Kolbens 416 der in seiner Freigabestellung befindliche Eingriffsabschnitt 420b ergriffen und mitgenommen, so gleitet der Eingriffsabschnitt 420b entlang der Führungsfläche 474 schräg nach unten, wobei er sich zunehmend der Gehäuse- und Kolbenachse 430 nähert und damit dem Zahngrund zwischen aufeinanderfolgenden Zähnen der Zahnreihe 448. Am unteren Ende der Fläche 474 angelangt, schlägt der Eingriffsabschnitt 420b in den sich beidseits an die Zahnreihe 448 anschließenden Bereichen zwischen den beiden Führungsbohrungen 470 an der oberen radialen Stirnfläche 472a an, so daß sich die die gewünschte Sperrwirkung auf den Kolben 416 ergibt. In dieser Eingriffsstellung 420b' wird der Eingriffsabschnitt 420b trotz seiner kreisrunden Querschnittsform zuverlässig gehalten, da die Neigung der Führungsfläche 474 ein radiales Ausweichen verhindert.

Dies ermöglicht es, den den Spannerkopf 426 tragenden Kolben 416 in beliebiger axialer Kolbenlage, insbesondere in der Transport- und Montagestellung mit eingefahrenem Kolben 416, am Führungsgehäuse 412 zu fixieren. Hierzu muß lediglich der Drahtbügel 420 in seiner unteren axialen Endstellung gegenüber dem Führungsgehäuse 412 fixiert werden, in welcher Endstellung der Eingriffsabschnitt 420b seine Eingriffsstellung 420b' aufgrund der schrägen Führungsfläche 474 einnimmt. In den Fig. 32, 33 und 35 ist ein strichpunktiert angedeutetes, plattenförmiges Verriegelungsteil 478 erkennbar, welches zwischen die umgebogenen Endbereiche 420a des in seiner unteren Endstellung befindlichen Drahtbügels 420 und die untere Stirnfläche 472b des Führungsgehäuses eingesteckt ist. Dabei ist der Drahtbügel 420 mehr oder weniger gestreckt, so daß trotz einer Vorspannung des Kolbens 416 mittels einer nicht dargestellten Schraubendruckfeder keine Möglichkeit besteht für eine Wegbewegung des Endabschnitts 420b aus seiner Eingriffsstellung 420b' in Eingriff mit der Sägeverzahnung 448 des Kolbens 416. Diese Art der Blockierung kann z. B. nach erfolgter Montage in einfacher Weise dadurch gelöst werden, daß man das Verriegelungsteil 478 entfernt.

Um stets sicherzustellen, daß die Sperrung des Kolbens 416 nach erfolgter Montage auch aufgehoben ist, kann das Sperrglied 478 so geformt sein, daß es zur vollständigen Durchführung der Montage entfernt werden muß. Dies erreicht man insbesondere dadurch, daß das Sperrglied 478 mit einem an der Vorderseite des Führungsgehäuses anliegenden, die untere Befestigungsbohrung 440 abdeckenden Lappen 478a versehen ist.

In den Fig. 36 bis 38 ist eine weitere Ausführungsform 510 des Kettenspanners dargestellt, welche sich von der Ausführungsform 410 gemäß den Fig. 32 bis 35 lediglich in der Führung der Seitenschenkel des Drahtbügels unterscheidet. Wie insbesondere Fig. 38 zeigt, sind die Seitenschenkel 520a des Drahtbügels 520 jeweils in eine zur Gehäuse- und Kolbenachse 530 parallele offene Nut 570 eingesetzt. Diese beiden Nuten befinden sich an der Montageseitenwand 549a des Führungsgehäuses 512, welche Fläche zur Anlage an einer entsprechenden Montagefläche 580 des vorgesehenen Trägers gemäß Fig. 38 bestimmt ist. Letztere Fläche 580 verdeckt nach erfolgter Montage die Nuten 570.

Um einen Verlust des Drahtbügels 520 vor der Montage aufgrund der offenen Nuten 570 auszuschließen, wird der Drahtbügel dadurch am Führungsgehäuse 512 fixiert, daß dieser im Bereich des den Eingriffsabschnitt 520b bildenden Mittelschenkel des im übrigen U-förmig gebogenen Drahtbügels 520 eine den Kolben im wesentlichen vollständig umgreifenden Abschnitt 520d aufweist, wie insbesondere Fig. 38 entnehmbar ist. Die beiden Enden dieses Abschnitts 520d können aufeinander zu laufend gebogen sein und in die Sägezahnreihe 548 eingreifen, wie dies anhand von Fig. 34 bereits vorstehend erläutert ist. Man erkennt ferner den lediglich in Fig. 34 dargestellten axialen Vorsprung 576, welcher dem Vorsprung 476 in Fig. 34 entspricht.

Bei den Kettenspannern 410 und 510 ist zur Fixierung des Kolbens in dessen eingefahrener Transport- und Montagestellung ein gesondertes Teil, nämlich das Verriegelungsteil 478, vorgesehen. In der in den Fig. 39 bis 43 dargestellten Ausführungsform 610 des Kettenspanners kann dieses gesonderte Teil entfallen, da an der unteren Stirnfläche 672b des Führungsgehäuses 612 im Bereich zwischen den Nuten 670, (die den Nuten 570 gemäß Fig. 36 bis 38 entsprechen) zwei axiale Vorsprünge 680 vorgesehen sind, an welchen die den Anschlagabschnitt bildenden beiden umgebogenen Bügelendbereiche 620c in der unteren axialen Endstellung des Drahtbügels 620 klemmend aufschiebbar sind. Mit strichpunktierter Umrißlinie ist diese Position 620' des Drahtbügels 620 angedeutet. Man erkennt, daß der Eingriffsabschnitt 620b seine Eingriffsstellung 620b' eingenommen hat und daß der entsprechende Bügelendbereich 620c eine Festlegestellung 620c' einnimmt, in der er an der radialen Endfläche 682 des entsprechenden Vorsprungs 680 klemmend anliegt. Der Seitenschenkel 620a nimmt eine weitgehend gestreckte Stellung 620a' ein. Der Eingriffsabschnitt 620b kann demzufolge trotz der von der Schraubendruckfeder 618 ausgeübten Kolbenausfahrkraft nicht entlang der Führungsfläche 674 des Vorsprungs 676 nach oben außer Eingriff mit der Sägeverzahnung gleiten.

Zur Lösung dieser Arretierung des Kolbens 616 innerhalb des Führungsgehäuses 612 sind lediglich die beiden Bügelendbereiche 620c in Richtung weg von der Montageseitenfläche 649a zu verschieben, bis sie von den axialen Vorsprüngen 680 abgleiten, deren Tiefe e gemäß Fig. 42 von der Montagefläche 649a aus gemessen geringer ist als die Nuttiefe f der beiden Nuten 670. Die beiden aufeinander zu laufenden Bügelendbereiche 620c befinden sich jetzt auf der von der Montagefläche 649a abgelegenen Seite der Vorsprünge 680, so daß sich der Drahtbügel 620 nunmehr frei zwischen seiner oberen axialen Endstellung, in der die Bügelendabschnitte 620c an der unteren Gehäusestirnfläche 672b anschlagen, und seiner unteren axialen Endstellung bewegen kann. Der Drahtbügel 620 hat wieder seine stärker gekrümmte Form gemäß Fig. 41 angenommen, so daß nicht die Gefahr besteht, daß in der unteren axialen Endstellung des Drahtbügels 620 die beiden Bügelendbereiche 620c ungewollt zur Anlage an den unteren Stirnflächen 682 der axialen Vorsprünge 680 gelangen. Eine unbeabsichtigte Blockierung des Kolbens 616 ist demnach ausgeschlossen.

Um bei der Montage des Kettenspanners 610 an der Montagefläche 681 des vorgesehenen Trägers zwangsläufig eine Aufhebung der Blockierung des Kolbens in seiner eingefahrenen Transport- und Montagestellung zu erreichen, sind die äußersten Enden 620d der beiden Endbereiche 620c in Richtung zur Montageseitenfläche 649a hin rechtwinklig umgebogen auf eine Länge g gemäß Fig. 42, die die Tiefe e der Vorsprünge 680 geringfügig übersteigt (siehe auch Fig 41). In der Transport- und Montagestellung, in welcher die beiden Bügelendbereiche 620c an der Fläche 682 der Vorsprünge 680 anliegen, stehen demzufolge die beiden äußersten Enden 620d über die Montageseitenfläche 649a des Führungsgehäuses 612 vor. Wird während der Montage des Kettenspanners 610 am vorgesehenen Träger das Führungsgehäuse 612 zunehmend mit seiner Montageseitenfläche 649a voraus der Montagefläche 681 des Trägers angenähert, so kommen schließlich die äußersten Enden 620d in Berührung mit der Fläche 681 und werden anschließend soweit in das Führungsgehäuse 612 eingedrückt, bis sie schließlich bündig mit der an der Fläche 681 anliegenden Fläche 649a abschließen. Aufgrund der die Tiefe e übersteigenden Länge g der äußersten Enden 620d befinden sich in dieser Stellung gemäß Fig. 43 die beiden aufeinander zu laufenden Bügelendbereiche 420c zwangsläufig im Bereich hinter den Vorsprüngen 680; die Blockierung des Kolbens 616 ist demzufolge aufgehoben.

Bei der Ausführungsform 710 des Kettenspanners gemäß den Fig. 44 bis 47 ist die Sperrfläche 724 in Form einer linearen Sägezahnreihe 748 wiederum am Umfang des Kolbens 716 in Richtung der Gehäuse- und Kolbenachse 730 verlaufend angeordnet. Das Sperrglied wird jedoch von einem Sperriegel 720 gebildet, welcher in einer radialen Führungsausnehmung 770 des Führungsgehäuses 712 in bezug auf die Achse 730 radial verschiebbar gelagert ist. Hinzu kommt ein gewisses Bewegungsspiel des Sperriegels in der Führungsausnehmung 770 in axialer Richtung (Spiel h in Fig. 45). Eine Blattfeder 768 drückt auf die von der Achse 730 abgewandte Außenseite des Sperriegels 720, um diesen in seine Eingriffsstellung vorzuspannen. In diese Eingriffsstellung greifen an der Innenseite des Riegels 720 vorgesehene, komplementär zur Sägezahnreihe 748 ausgebildete Sägezähne 784 in die Sägezahnreihe 748 ein; bei einer Einfahrbewegung des Kolbens 716 aus einer beliebigen axialen Stellung heraus wird demzufolge der Sperriegel 720 von der Sägezahnreihe 748 mitgenommen, bis schließlich die Unterseite 786 des Sperriegels 720 an der dem Spannerkopf zugewandten Seitenfläche 788 der Führungsausnehmung 770 anschlägt. Da bei der der Einfahrbewegung vorangegangenen Ausfahrbewegung des Kolbens 716 der Sperriegel 720 seine in Fig. 45 dargestellte obere axiale Endstellung einnimmt, steht für die Einfahrbewegung stets ein Einfahrhub zur Verfügung, der größer ist als h und kleiner ist als h zuzüglich dem Abstand d aufeinanderfolgender Zähne.

Um auch bei hohen Einfahrkräften eine Sperrung der Einfahrbewegung (nach Zurücklegung des zulässigen Einfahrhubs) sicherzustellen, sind beide Zahnflanken der einzelnen Zähne der Sägezahnreihe 148 in gleicher Richtung geneigt, also in Fig. 45 nach links unten. Dies führt dazu, daß die komplementär geformten Zähne 784 des Sperriegels 720 bei einer Einfahrbewegung des Kolbens 716 von der Sägezahnreihe 748 in Richtung zur Achse 730 angezogen werden.

Die Vorspann-Blattfeder 768 kann in einfacher Weise dadurch am Führungsgehäuse 712 befestigt werden, daß man das in Fig. 45 untere Blattfederende in eine flache Nut 790 des Führungsgehäuses 712 unterhalb der Führungsausnehmung 770 einlegt und durch einen entsprechenden Schlag die Seitenränder der Nut 790 zur Blattfeder hin deformiert. Man kann auch eine Blattfeder mit die Nutbreite geringfügig übersteigender Blattfederbreite verwenden und in die Nut 790 eindrücken.

Um ein Auseinanderfallen von Kolben 716 und Führungsgehäuse 712 zu verhindern, ist die Sägezahnreihe 748 am Kolbenumfang radial nach einwärts versetzt, so daß sich am spannerkopffernen Ende der Sägezahnreihe, an welche sich ein Kolbenabschnitt mit vollem Querschnitt anschließt, ein Absatz bildet mit einer radialen nach oben gewandten Anschlagsfläche 791. Bei einer Ausfahrbewegung des Kolbens 716 gelangt schließlich diese Fläche 791 zur Anlage an der unteren Fläche 786 des Sperriegels 720, was schließlich ein weiteres Ausfahren des Kolbens 716 verhindert.

Um den Kolben 716 in einer vorgegebenen axialen Lage, z. B. in der eingefahrenen Endstellung (Transport- und Montagestellung) entgegen der Kraft der Schraubendruckfeder 718 im Inneren des Führungsgehäuses 712 festlegen zu können, ist ein Verriegelungsbolzen 792 vorgesehen, welcher in eine die Kolbenbohrung 714 des Führungsgehäuses 712 scheidende, in einer radialen Ebene liegende Gehäusebohrung 794 (siehe Fig. 46) einsetzbar ist. Der Verriegelungsbolzen 792 besteht aus einem verformbaren Material, vorzugsweise Kunststoff. Er weist einen durchmesserverringerten Mittelabschnitt 792a sowie zwei Endabschnitte 792b auf, deren Querschnitt dem Querschnitt der Gehäusebohrung 794 im wesentlichen entspricht.

Wie die Fig. 44 zeigt, verläuft die Gehäusebohrung 794 parallel zu den beiden Befestigungsbohrungen 740 des Führungsgehäuses 712, also zwischen der Montageseitenfläche 749a und der gegenüberliegenden Seitenfläche 749b des Führungsgehäuses 712.

Zur axialen Fixierung des Kolbens 716 wird nun von der Montageseitenfläche 749a aus der Verriegelungsbolzen 792 in die Gehäusebohrung 794 eingesteckt und zu etwa 2/3 der Bolzenlänge in die Gehäusebohrung 794 eingeschlagen. Die axiale Länge der drei Abschnitte 792b, 792a, 792b, beträgt jeweils etwa 1/3 der Bolzengesamtlänge. Der Bolzen 792 nimmt dann die in Fig. 46 eingezeichnete Stellung ein, in der der Endabschnitt 792b in der Höhe des Kolbenumfangs des Kolbens 716 angeordnet ist. Aufgrund der Verschneidung der Führungsbohrung 794 mit der Kolbenbohrung 714 muß sich der Abschnitt 792b in dieser Stellung entsprechen verformen, da der Kolben 716 nicht nachgibt. Aufgrund dieser elastischen und/oder plastischen Verformung des Abschnitts 792b ergibt sich ein Reibungskraftschluß zwischen Kolben 716 und Verriegelungsbolzen 792 und damit zwischen Kolben 716 und Führungsgehäuse 712.

Bei der Montage des Kettenspanners 710 am vorgesehenen Träger wird dieser Reibungskraftschluß selbsttätig aufgehoben. Drückt man nämlich das Führungsgehäuse 712 mit seiner Montageseitenfläche 749a voraus an die vorgesehene Montagefläche 780 des Trägers, so wird im Laufe dieser Bewegung der Verriegelungsbolzen 792 zwangsläufig in die Gehäusebohrung 794 eingedrückt, wie dies Fig. 47 zeigt. Nunmehr befindet sich der durchmesserverringerte Mittelabschnitt 792a im Bereich des Kolbenumfangs; der Durchmesser und die axiale Länge des Mittelabschnitts 792a sind derart festgelegt, daß der Mittelabschnitt 792a in dieser Stellung außer Berührung mit dem Kolbenumfang bleibt.

Die anhand der Fig. 44, 46 und 47 erläuterte Möglichkeit der Verriegelung des Kolbens im Führungsgehäuse in einer Transport- und Montagestellung läßt sich unmittelbar auch bei den vorstehend beschriebenen Ausführungsformen gemäß Fig. 1 bis 43 einsetzen. In Fig. 48 ist eine weitere Ausführungsform 810 eines Kettenspanners dargestellt, welcher eine Weiterentwicklung des Kettenspanners 710 gemäß Fig. 44 bis 47 darstellt. Bauelemente des Kettenspanners 810, die ihrer Funktion nach in Bauelementen des Kettenspanners 710 ihre Entsprechung haben, sind mit denselben Bezugsziffern, jeweils vermehrt um die Zahl 100 versehen.

Innerhalb des Führungsgehäuses 812 ist der den Spannerkopf 826 tragende Kolben 816 in Richtung der Gehäuseachse 830 verschiebbar gelagert. Eine Schraubendruckfeder 818 innerhalb einer koaxialen Innenbohrung 834 des Kolbens 816, welcher sich einerseits gegen den Gehäuseboden 831 und andererseits gegen den Boden der sacklochartigen Bohrung 834 abstützt, drückt den Spannerkopf 826 weg vom Gehäuse 812 gegen eine nicht dargestellte Kette. Durch eine Bohrung 817 eines stricheliert angedeuteten seitlichen Ölnippels 815 tritt, ähnlich Fig 17, Öl in das Gehäuse ein, welches über einen nicht dargestellten Axialkanal des Gehäuses zur unteren Mündung der Bohrung 834 geführt wird und schließlich durch eine den Spannerkopf 826 durchsetzende Leitung 851 an die zu schmierende Kette gelangt.

Der Sperriegel 820 ist mit einer Sägezahnreihe 884 versehen. Die dem Spannerkopf 826 zugewandten Zahnflanken 884a liegen jeweils in einer zur Achse 830 senkrechten Ebene (Radialebene); die vom Spannerkopf 826 weg gewandten anderen Zahnflanken 884b sind geneigt und schließen beispielsweise einen Winkel von etwa 60° mit der Radialebene ein. Die Zahnreihe 884 greift in eine komplementär geformte Zahnreihe 848 ein, welche sich in Richtung parallel zur Achse 830 am Kolbenaußenumfang erstreckt. Die Umfangsbreite der Zahnreihe entspricht angenähert der in Richtung senkrecht zur Zeichenebene der Fig. 48 gemessenen Breite des Sperriegels 820 und umfaßt beispielsweise einen Winkelbereich in Bezug auf die Achse 830 von etwa 30°.

Die Zahnreihe 848 ist geringfügig radial nach einwärts bezogen auf den Außenumfang des Kolbens 816 versetzt. Am oberen und unteren Ende der Zahnreihe Schließt sich jeweils eine Radialfläche 891 und 893 an. Die untere Radialfläche 891 bildet einen Ausfahr-Anschlag für den Kolben 816, da am Ende der Ausfahrbewegung das untere Ende (Ecke 900 des Sperriegels 820) zur Anlage an die Radialfläche 891 gelangt.

Der Sperriegel 820 hat angenähert die Form einer in Richtung der Achse 830 länglichen Platte, mit zwei zueinander und zur Zeichenebene der Fig. 48 parallelen Seitenflächen, einer die Zahnreihe 848 tragenden schmalen Vorderseite, einer zu dieser parallelen schmalen Hinterseite 902, einer zu diesen Seiten senkrechten Oberseite 904 sowie einer Unterseite 906. Die Unterseite 906 verläuft geneigt und zwar in Richtung weg von der Achse 830 nach oben, d. h. zum Spannerkopf 826 hin. Der Sperriegel 820 ist in eine Führungsausnehmung 910 des Führungsgehäuses 812 eingesetzt, welche der Form des Sperriegels 820 angepaßt ist, also beispielsweise auch eine entsprechend der Unterseite 906 geneigt verlaufende, untere Ausnehmungsfläche 912 besitzt. Die Führungsausnehmung 910 ist jedoch in Achsrichtung länger als der Sperriegel 820, um die gewünschte Funktion zu erhalten, d. h. um es bei einer Ausfahr-Bewegung des Kolbens 816 zu ermöglichen, daß die Zahnreihe 884 des Sperriegels 820 außer Eingriff mit der Zahnreihe 848 am Kolbenumfang gelangt.

Die Führungsausnehmung 910 setzt sich anschließend an den Sperriegel 820 in einer radialen Ausnehmung 914 fort, in welche eine Schraubendruckfeder 868 eingesetzt ist. Diese Feder verläuft in radialer Richtung und stützt sich einerseits an der Hinterseite 902 des Sperriegels 820 ab und andererseits an einem zur Achse 830 parallel verlaufenden Schenkel 916 eines Haltewinkels 918. Dieser Schenkel schließt mit dem Außenumfang des Führungsgehäuses 812 bündig ab und ist mittels beispielsweise eines Nietkopfs 920 am Gehäuse festgenietet. Der andere, radial auf die Achse 830 zulaufende Schenkel 922 schließt die Ausnehmung 914 nach oben hin ab, welche hier zur Erleichterung des Einsetzens des Sperriegels 820 nach oben hin offen ist.

Um nach der Montage des Kettenspanners 810 am vorgesehenen Orte den Kolben in die Anfangsstellung zurückschieben zu können, muß der Sperriegel 820 außer Eingriff mit der Sägezahnreihe 848 gebracht werden. Dies kann man beispielsweise dadurch erreichen, daß man durch einen nicht dargestellten Werkzeug-Einführkanal von außen her an den Sperriegel 820 angreift und diesen entgegen der Kraft der Schraubendruckfeder 868 nach außen schiebt. Eine weitere Möglichkeit besteht darin, daß man den Kolben 816 um die Kolbenachse 830 außer Eingriff mit dem Sperriegel 320 verdreht.

Ergibt sich nun während des Betriebes eine Längung der Kette, so wird der Spannerkopf 826 von der Feder 818 dementsprechend nach außen gedrückt, ggf. unterstützt durch den Druck des durch die Bohrung 817 eindringenden Schmieröls auf den Kolben 816. Bei dieser Auswärtsbewegung des Kolbens 816 wird der unter dem Druck der Feder 868 an die Kolben-Zahnreihe 848 gedrückte Sperriegel 820 solange mitgenommen, bis seine Oberseite 904 an die entsprechende Begrenzungsfläche der Führungsausnehmung 910 anschlägt. Anschließend gleiten die geneigten Zahnflanken keilartig gegeneinander bis schließlich, je nach Größe der Kettenlängung die beiden Zahnreihen um einen oder mehrere Zähne gegeneinander versetzt ineinandergreifen. Der maximale Rückhub (kurz bevor die Zahnreihen ineinander um einen Zahn versetzt eingreifen) ist die Summe von Zahnabstand und axialem Bewegungsspiel des Sperriegels 820 in der Führungsausnehmung 910. Die Einschubbewegung des Kolbens 816 aus einer beliebigen Zwischenstellung wird spätestens nach Vollführung dieses maximalen Rückhubs dadurch beendet, daß der Sperriegel 920 mit seiner geneigten Unterseite 906 auf die geneigte Fläche 912 der Aufnahme 910 trifft und anschließend keilartig nach unten und radial nach innen in zwangsläufigen Eingriff mit der Kolben-Zahnreihe 848 gedrückt wird. Die geneigten Flächen 906 und 912 bilden also eine Anzugsschräge. Da die beiden Flächen flächig aneinanderliegen, ergibt sich praktisch kein Verschleiß; falls es hierauf nicht entscheidend ankommt, genügt es, wenn eine dieser Flächen geneigt verläuft und die andere Fläche zu einer Kante oder einem Anlagepunkt reduziert wird. Die Schraubendruckfeder 868 dient also lediglich dazu, daß die beiden Zahnreihen prinzipiell in gegenseitigem Eingriff bleiben; die eigentliche Anzugskraft, mit welcher der Sperriegel 820 in die Kolben-Zahnreihe 848 gedrückt wird, resultiert jedoch aus der von der Kette auf den Kolben 816 ausgeübten Einschubkraft verringert um einen von der Neigung der Anzugsschrägflächen abhängigen Faktor. Der Winkel der Flächen 906 und 912 mit einer radialen Ebene beträgt vorzugsweise angenähert 30°.

Der Sperriegel 820 ist frei beweglich innerhalb der Führungsaufnahme 910 gelagert, so daß eine Drehzapfenlagerung oder dgl. entfallen kann. Es ergeben sich also geringe Herstellungskosten bei zuverlässiger, verschleiß- und wartungsarmer Funktion und hoher mechanischer Festigkeit.

**Patentansprüche**

1. Kettenspanner (710; 810) mit einem in einem Führungsgehäuse (712; 812) längs seiner Achse (730; 830) verschiebbaren, einen Spannerkopf (826) tragenden, in Richtung zum Spannerkopf vorgespannten Kolben (716; 816) und einer zwischen Führungsgehäuse und Kolben wirkenden, den Einfahrhub des Kolbens von seiner momentanen axialen Stellung aus begrenzenden Sperreinrichtung mit einer am Kolbenumfang in axialer Richtung verlaufend ausgebildeten Sägezahnreihe (748; 848) und einem in einer Führungsausnehmung (770; 910) des Führungsgehäuses beweglich gelagerten, einen Sägezahn zum Eingriff in die Sägezahnreihe (748; 848) aufweisenden Sperriegel (720; 820), welcher zwischen einer Sperrstellung mit Eingriff in die Sägezahnreihe und einer Freigabestellung außer Eingriff mit der Sägezahnreihe radial beweglich ist und in die Sperrstellung mittels eines sich am Führungsgehäuse abstützenden Vorspannelements federvorgespannt ist mit zusätzlichem Bewegungsspiel in axialer Richtung zur Ermöglichung eines begrenzten Einfahrhubs des Kolbens von einer jeweiligen momentanen axialen Raststellung aus, dadurch <u>gekennzeichnet,</u>

daß der Sperriegel (720; 820) innerhalb der Führungsausnehmung (770; 910) in der Bewegungsebene frei beweglich gelagert ist und eine zur Sägezahnreihe (748; 848) am Kolbenumfang komplementäre und in der Sperrstellung in diese eingreifende Sägezahnreihe (784; 884) aufweist, und daß eine an dem vom Spannerkopf abgewandten Ende des Sperriegels am Sperriegel (910) oder am Gehäuse (812) ausgebildete oder von der vom Spannerkopf abgewandten Flankenseite eines jeden Sägezahns der Sägezahnreihe (784) jeweils gebildete, zur Kolbenachse geneigte Anzugsschräge vorgesehen ist, welche bei einer Einfahrtbewegung des Kolbens mit dem Sperriegel im Sinne einer radialen Einwärtsbewegung des Sperriegels zusammenwirkt (Fig. 44, 45, 48).

2. Kettenspanner nach Anspruch 1,
dadurch gekennzeichnet,
daß der Anzugsschräge (906) des Sperriegels (910) eine entsprechend geneigte Gegenfläche (912) des Gehäuses (812) gegenüberliegt (Fig. 48).

3. Kettenspanner nach Anspruch 2,
dadurch gekennzeichnet,
daß die vom Spannerkopf (826) abgewandte Flankenseite (884b) der Sägezähne angenähert radial orientiert ist.

4. Kettenspanner nach einem der vorhergehenden Ansprüche,
dadurch gekennzeichnet,
daß das Vorspannelement von einer am Führungsgehäuse (712; 812) angebrachten, vorzugsweise in die Führungsausnehmung (790) eingepreßten Blattfeder (768) oder von einer in radialer Richtung verlaufenden, sich einerseits am Sperriegel (820) und andererseits am Gehäuse (812), vorzugsweise an einem am Gehäuse befestigten Haltewinkel (918) abstützenden Schraubendruckfeder (868) gebildet ist.

5. Kettenspanner nach einem der vorhergehenden Ansprüche,
dadurch gekennzeichnet,
daß die Sägezahnreihe (748; 848) am Kolbenumfang radial nach einwärts versetzt ist, und daß am spannerkopffernen Ende der Sägezahnreihe (748; 848) eine im wesentlichen radiale Anschlagsfläche (791; 891) ausgebildet ist, welche bei einer Ausfahrbewegung des Kolbens (716; 816) zur Anlage am Sperriegel (720; 820) gelangt und eine weitere Ausfahrbewegung des Kolbens (716; 816) unterbindet.

6. Kettenspanner (410; 510; 610) mit einem in einem Führungsgehäuse (412; 512; 612) längs seiner Achse (430; 530) verschiebbaren, einen Spannerkopf (426) tragenden, in Richtung zum Spannerkopf vorgespannten Kolben (416; 616) und einer zwischen Führungsgehäuse und Kolben wirkenden, den Einfahrhub des Kolbens von seiner momentanen axialen Stellung aus begrenzenden Sperreinrichtung mit einer am Kolbenumfang in axialer Richtung verlaufend ausgebildeten Sägezahnreihe (448; 548) und einem in einer Führungsausnehmung (470; 570; 670) des Führungsgehäuses beweglich gelagerten Sperriegel (420; 520; 620), welcher einen zwischen einer Sperrstellung mit Eingriff in die Sägezahnreihe und einer Freigabestellung außer Eingriff mit der Sägezahnreihe radial beweglichen in die Sperrstellung federvorgespannten Eingriffsabschnitt aufweist mit zusätzlichem Bewegungsspiel in axialer Richtung zur Ermöglichung eines begrenzten Einfahrhubs des Kolbens von einer jeweiligen momentanen axialen Raststellung aus,
dadurch gekennzeichnet,
daß der Sperriegel (420; 520; 620) von einem im wesentlichen U-förmigen Drahtbügel gebildet ist, dessen Seitenschenkel (420a; 520a; 620a) in je einer der Führungsausnehmungen (470; 570; 670) des Gehäuses achsparallel verlaufen, dessen Mittelschenkel den Eingriffsabschnitt (420b; 520b; 620b) bildet und dessen Bügelendbereiche (420c; 620c) zur Bildung eines Anschlagsabschnittes zur Anlage an Anschlagsflächen des Führungsgehäuses im wesentlichen rechtwinkelig zu den Seitenschenkeln umgebogen sind, daß am Führungsgehäuse eine zur Führungsgehäuseachse geneigte Führungsfläche (474; 674) für den Eingriffsabschnitt vorgesehen ist, an welcher entlang der Eingriffsabschnitt bei einer Bewegung des Drahtbügels in dessen eine axiale Endstellung zwangsweise in die Eingriffsstellung bewegt wird, und daß zur Herstellung der Vorspannung des Eingriffsendes der federnd ausgebildete Drahtbügel um eine zum Mittelabschnitt (420b; 520b; 620b) parallele Krümmungsachse vorgebogen ist (Fig. 32 bis 41).

7. Kettenspanner (310; 310') mit einem in einem Führungsgehäuse (312; 312') längs seiner Achse (330) verschiebbaren, einen Spannerkopf (326) tragenden, in Richtung zum Spannerkopf vorgespannten Kolben (316) und einer zwischen Führungsgehäuse und Kolben wirkenden, den Einfahrhub des Kolbens von seiner momentanen axialen Stellung aus begrenzenden Sperreinrichtung mit einer am Kolbenumfang in axialer Richtung verlaufend ausgebildeten Sägezahnreihe (348) und einem in einer Führungsausnehmung (370) des Führungsgehäuses beweglich gelagerten Sperriegel (320), welcher einen zwischen einer Sperrstellung mit Eingriff in die Sägezahnreihe und einer Freigabestellung außer Eingriff mit der Sägezahnreihe radial beweglichen in die Sperrstellung federvorgespannten Eingriffsabschnitt aufweist mit zusätzlichem Bewegungsspiel in axialer Richtung zur Ermöglichung eines begrenzten Einfahrhubs des Kolbens von einer jeweiligen momentanen axialen Raststellung aus,
dadurch gekennzeichnet,
daß der Sperriegel (320) von einem im wesentlichen U-förmigen steifen Sperrbügel gebildet ist, von dessen im wesentlichen achsparallelem Mittelabschnitt (320a) als Seitenabschnitte der Eingriffsabschnitt (320b) sowie ein Anschlagsabschnitt (320c) zur Anlage an Anschlagsflächen des Führungsgehäuses bei einer Einfahrbewegung bzw. einer Ausfahrbewegung des Kolbens rechtwinkelig abstehen, daß der Mittelabschnitt (320a) in der Führungsausnehmung des Führungsgehäuses mit radialem Spiel zur Bewegung des Eingriffsabschnitts zwischen seiner Sperrstellung und seiner Eingriffsstellung gelagert ist, und daß eine Vorspannfeder den Mittelabschnitt radial nach einwärts spannt (Fig. 27 bis 31).

8. Kettenspanner nach Anspruch 7,
dadurch <u>gekennzeichnet,</u>
daß die Vorspannfeder eine Blattfeder (368; 368') ist.

9. Kettenspanner (10) mit einem in einem Führungsgehäuse (12) längs seiner Achse (30) verschiebbaren, einen Spannerkopf (26) tragenden, in Richtung zum Spannerkopf vorgespannten Kolben (16) und einer zwischen Führungsgehäuse und Kolben wirkenden, den Einfahrhub des Kolbens von seiner momentanen axialen Stellung aus begrenzenden Sperreinrichtung mit einer am Führungsgehäuse in axialer Richtung verlaufend ausgebildeten Sägezahnreihe (48) und einem mit dem Kolben verbundenen Federelement mit einem Endabschnitt, welcher zwischen einer Sperrstellung mit Eingriff in die Sägezahnreihe und einer Freigabestellung außer Eingriff mit der Sägezahnreihe beweglich ist und in die Sperrstellung aufgrund entsprechender Federvorspannung des Federelements vorgespannt ist mit Abfederung des Kolbens zur Ermöglichung eines begrenzten Einfahrhubs des Kolbens von der jeweiligen momentanen axialen Raststellung aus,
dadurch <u>gekennzeichnet,</u>
daß das Federelement von einer in einer Umfangsnut (22) des Kolbens (16) gehalterten Drahtfeder (20) gebildet ist, welche mit im wesentlichen radial nach außen gebogenen Endabschnitten (23) versehen ist, die an am Gehäuse (12) einander gegenüberliegend vorgesehenen, zur Gehäuseachse (30) parallelen Flächen anliegen, von denen wenigstens eine als Sperrfläche (24) mit der Sägezahnreihe (48) ausgebildet ist (Fig. 1 bis 7).

10. Kettenspanner nach Anspruch 9,
dadurch <u>gekennzeichnet,</u>
daß die Sperrflächen (24) an den Längsrändern einer in Achsrichtung (30) länglichen, vorzugsweise in Achsrichtung beidseits abgeschlossenen Gehäusedurchbrechung (42) vorgesehen sind.

11. Kettenspanner nach Anspruch 9 oder 10,
dadurch <u>gekennzeichnet,</u>
daß die Gehäusedurchbrechung (42) mit einer Erweiterungsnut (50) in Umfangsrichtung versehen ist, in welche wenigstens einer der Endabschnitte (23) der Drahtfeder (20) in einer Montagestellung des Kolbens (16) einrastet.

12. Kettenspanner nach Anspruch 11,
dadurch <u>gekennzeichnet,</u>
daß der eingerastete Endabschnitt (23') über die Außenseite (49) des Führungsgehäuses (12) vorsteht, und daß die Erweiterungsnut (50) derart im Bereich eines Befestigungselements, insbesondere im Bereich einer Befestigungsbohrung (40), des Führungsgehäuses (12) angeordnet ist, daß eine Befestigung des Führungsgehäuses (12) am vorgesehenen Träger nur bei aus der Erweiterungsnut (50) herausbewegtem Endabschnitt (23) möglich ist.

13. Kettenspanner nach einem der Ansprüche 9 bis 12,
dadurch <u>gekennzeichnet,</u>
daß das Führungsgehäuse (12), vorzugsweise am kettenspannerkopfseitigen Ende der Durchbrechung (42), mit einem in einer radialen Ebene liegenden, in die Kolbenbohrung (14) mündenden Einsetzschlitz (44) versehen ist sowie mit einer in dieser Ebene liegenden Teilumfangsnut (46) in der Kolbenbohrung (14), deren Enden in den Einsetzschlitz (44) einmünden.

14. Kettenspanner nach einem der Ansprüche 9 bis 13,
dadurch <u>gekennzeichnet,</u>
daß das Führungsgehäuse (12a) ein im wesentlichen zylindrisch gebogenes Blechteil (54) umfaßt mit einem Mittelstück (54a) geringerer Breite in Gehäuseumfangsrichtung als der Gehäuseumfang, deren zur Gehäuseachse (30) parallele, voneinander beabstandete Längsränder zur Bildung der Sperrflächen mit je einer Sägezahnreihe (48') versehen sind und mit Befestigungslaschen (54b, 54c) an beiden Längsenden des Mittelstücks (54a) zur starren Verbindung der Längsränder, und daß das Mittelstück (54a) vorzugsweise mit einer nach innen umgebogenen Stützlasche (54d) versehen ist, an welche sich eine Kolbenvorspannfeder (18) abstützt (Fir. 5-7).

15. Kettenspanner mit einem in einem Führungsgehäuse längs seiner Achse (30) verschiebbaren, einen Spannerkopf tragenden, in Richtung zum Spannerkopf vorgespannten Kolben (16) und einer zwischen Führungsgehäuse und Kolben wirkenden, den Einfahrhub des Kolbens von seiner momentanen axialen Stellung aus begrenzenden Sperreinrichtung mit einer am Führungsgehäuse in axialer Richtung verlaufend ausgebildeten Sägezahnreihe (48) und einem mit dem Kolben verbundenen Federelement mit einem Endabschnitt, welcher zwischen einer Sperrstellung mit Eingriff in die Sägezahnreihe und einer Freigabestellung außer Eingriff mit der Sägezahnreihe beweglich ist und in die Sperrstellung aufgrund entsprechender Federvorspannung des Federelements vorgespannt ist mit Abfederung des Kolbens zur Ermöglichung eines begrenzten Einfahrhubs des Kolbens von der jeweiligen momentanen axialen Raststellung aus,
dadurch <u>gekennzeichnet,</u>
daß das Federelement von einer länglichen Blattfeder (20a; 20b; 20c) gebildet ist, welche im Bereich ihrer Längenmitte am Kolben (16), vorzugsweise an einem vom Kolben (16) radial abstehenden Stift (60) befestigt und um eine zur Kolbenachse (30) senkrechte Krümmungsachse derart gebogen ist, daß die Blattfederenden an den einander gegenüberliegenden Sägezahnreihen (48) unter Vorspannung anliegen an Eingriffstellen, welche auf der spannerkopffernen Seite der Befestigungsstelle der Blattfeder (20a; 20b; 20c) am Kolben (16) liegen (Fig. 8 bis 12).

16. Kettenspanner (110) mit einem in einem Führungsgehäuse (112) längs seiner Achse (130) verschiebbaren, einen Spannerkopf (126) tragenden, in Richtung zum Spannerkopf vorgespannten Kolben (116) und einer zwischen Führungsgehäuse und Kolben wirkenden, den Einfahrhub des Kolbens von seiner momentanen axialen Stellung aus begrenzenden Sperreinrichtung mit einer am Führungsgehäuse in axialer Richtung verlaufend ausgebildeten Sägezahnreihe (148) und einem mit dem Kolben verbundenen Federelement mit einem Endabschnitt, welcher zwischen einer Sperrstellung mit Eingriff in die Sägezahnreihe und einer Freigabestellung außer Eingriff mit der Sägezahnreihe beweglich ist und in die Sperrstellung aufgrund entsprechender Federvorspannung des Federelements vorgespannt ist mit Abfederung des Kolbens zur Ermöglichung eines begrenzten Einfahrhub des Kolbens von der jeweiligen momentanen axialen Raststellung aus,
dadurch gekennzeichnet
daß das Federelement von einer länglichen Blattfeder (120) gebildet ist, mit einem ein Ende bildenden Befestigungsabschnitt (120a) zur Befestigung am Kolben (116) oder Spannerkopf, mit einem eine vom Kolben abgewandte, die Sägezahnreihe (148) aufweisende Sperrfläche (124) von außen her übergreifenden Hauptabschnitt (120b) sowie mit einem das andere Ende bildende, zur Sperrfläche (124) hin gebogenen, an dieser unter Vorspannung anliegenden Endabschnitt (120c), wobei die axiale Gesamtlänge von Hauptabschnitt und Endabschnitt wenigstens gleich dem maximalen Arbeitshub des Kolbens (116) ist (Fig. 16, 17).

17. Kettenspanner nach Anspruch 16,
dadurch gekennzeichnet,
daß am spannerkopfseitigen Ende der Sperrfläche (124) ein Anschlagsvorsprung (153) für den Endabschnitt (120c) ausgebildet ist.

18. Kettenspanner (110'') mit einem in einem Führungsgehäuse (112'') längs seiner Achse verschiebbaren, einen Spannerkopf (126'') tragenden, in Richtung zum Spannerkopf vorgespannten Kolben (116'') und einer zwischen Führungsgehäuse und Kolben wirkenden, den Einfahrhub des Kolbens von seiner momentanen axialen Stellung aus begrenzenden Sperreinrichtung mit einer am Führungsgehäuse in axialer Richtung verlaufend ausbildeten Sägezahnreihe (148'') und einem mit dem Kolben verbundenen Federelement mit einem Endabschnitt, welcher zwischen einer Sperrstellung mit Eingriff in die Sägezahnreihe und einer Freigabestellung außer Eingriff mit der Sägezahnreihe beweglich ist und in die Sperrstellung aufgrund entsprechender Federvorspannung des Federelements vorgespannt ist mit Abfederung des Kolbens zur Ermöglichung eines begrenzten Einfahrhubs des Kolbens von der jeweiligen momentanen axialen Raststellung aus,
dadurch gekennzeichnet,
daß das Federelement von einem Drahtbügel (120'') gebildet ist, dessen eines Ende als Befestigungsabschnitt (120a''; 120a''') den Kolben (116''; 116''') umgreift oder eine radiale Kolbenbohrung durchsetzt, wobei das andere Ende des Drahtbügels von der Gehäuseaußenseite aus in eine zur Gehäuseachse (130'') parallel verlaufende Gehäusenut (159) eingreift und an einer eine mit der Sägezahnreihe (148'') versehene Sperrfläche (124'') bildenden Nutseitenwand unter Vorspannung anliegt (Fig. 19 bis 23).

19. Kettenspanner (210) mit einem in einem Führungsgehäuse (212) längs seiner Achse (230) verschiebbaren, einen Spannerkopf (226) tragenden, in Richtung zum Spannerkopf vorgespannten Kolben (216) und einer zwischen Führungsgehäuse und Kolben wirkenden, den Einfahrhub des Kolbens von seiner momentanen axialen Stellung aus begrenzenden Sperreinrichtung mit einer am Führungsgehäuse ausgebildeten Sägezahnreihe (248) und einem mit dem Kolben verbundenen Federelement mit einem Endabschnitt, welcher zwischen einer Sperrstellung mit Eingriff in die Sägezahnreihe und einer Freigabestellung außer Eingriff mit der Sägezahnreihe beweglich ist und in die Sperrstellung aufgrund entsprechender Federvorspannung des Federelements vorgespannt ist mit Abfederung des Kolbens zur Ermöglichung eines begrenzten Einfahrhubs des Kolbens von der jeweiligen momentanen axialen Raststellung aus,
dadurch gekennzeichnet,
daß die Sägezahnreihe (248) am Gehäuse (212) längs eines zur Gehäuseachse (230) zentrischen in radialer Ebene liegenden Umfangskreises verlaufend angeordnet ist, und daß das Federelement an einem Gleitstück (205) befestigt ist, welches längs des Umfangskreises beweglich gelagert ist und in eine Spiralnut (207) am Außenumfang des Kolbens (216) eingreift (Fig. 24-26).

20. Kettenspanner nach Anspruch 19,
dadurch gekennzeichnet,
daß der spannerkopfnahe Endbereich (209) der Spiralnut (207) in Richtung zum anderen Ende der Spiralnut (207) hin abgebogen ist, wobei vorzugsweise die Knickstelle (217) der spannerkopffernen Nutseitenwand (211) des abgebogenen Endbereichs (209) der Spiralnut (207) in Umfangsrichtung dem entsprechenden Nutende näher liegt als die gegenüberliegende Knickstelle (215) der spannerkopfnahen Nutseitenwand (213).

21. Kettenspanner nach einem der vorhergehenden Ansprüche,
    dadurch gekennzeichnet,
    daß eine die Kolbenbohrung (714) des Führungsgehäuses (712) anschneidende, vorzugsweise in radialer Ebene liegende Gehäusebohrung (794) vorgesehen ist, welche von einer Seitenfläche (794a) des Führungsgehäuses ausgeht und in welche ein Verriegelungsbolzen (792) zur axialen Fixierung des Kolbens (716) einsetzbar ist, vorzugsweise aus relativ leicht verformbarem Material und mit einem durchmesserverringerten Mittelabschnitt (792a) (Fig. 46, 47).

## Claims

1. Chain tersioner (710; 810) having a piston (716; 816) displaceable in a guide housing (712; 812) along its axis (730; 830), carrying a tensioner head (826) and initially stressed in the direction towards the tensioner head and a catch device, acting between guide housing and piston and limiting the inward stroke of the piston from its momentary axial position, with a saw-tooth row (748; 848) formed extending in the axial direction on the piston circumference, and a catch bolt (720; 820) mounted movebly in a guide aperture (770; 910) of the guide housing and having a saw tooth for engagement in the saw-tooth row (748; 848), which catch bolt is radially movable between a blocking position with engagement in the saw-tooth row and a release position out of engagement with the saw-tooth row and is initially spring-stressed into the blocking position by means of an initial-stress element bearing on the guide housing, with additional movement play in the axial direction to render possible a limited inward stroke of the piston from a momentary axial detent position in each case, characterised in that the catch bolt (720; 820) is mounted freely movably in the plane of movement within the guide aperture (770; 910) and comprises a saw-tooth row (784; 884) complementary to the saw-tooth row (748; 848) on the piston circumference and engaging therein in the blocking position, and in that a tightening ramp formed at the end of the catch bolt remote from the tensioner head on the catch bolt (910) or on the housing (812) or formed by the flank side remote from the tensioner head, of each saw tooth of the saw-tooth row (784) in each case, and incline to the piston axis, is provided which on an inward movement of the piston co-operates with the catch bolt in the direction of a radial inward movement of the catch bolt (Figures 44, 45, 48).

2. Chain tensioner according to Claim 1, characterised in that the tightening ramp (906) of the catch bolt (910) has lying opposite to it a correspondingly inclined counter-surface (912) of the housing (812) (Figure 48).

3. Chain tensioner according to Claim 2, characterised in that the flank side (884b), remote from the tensioner head (826), of the saw teeth is approximately radially oriented.

4. Chain tensioner according to one of the preceding Claims, characterised in that the initial-stress element is formed by a leaf spring (768) fitted on the guide housing (712; 812), preferably pressed into the guide aperture (790) or by a helical compression spring (868) extending in a radial direction and supported for one part on the catch bolt (820) and for the other part on the housing (812), preferably on a retaining angle piece (918) secured on the housing.

5. Chain tensioner according to one of the preceding Claims, characterised in that the saw-tooth row (748; 848) is offset radially inwards on the piston circumference and in that on the end of the saw-tooth row (748; 848) remote from the tensioner head a substantially radial stop face (791; 891) is formed which, on an outward movement of the piston (716; 816) comes to abut on the catch bolt (720; 820) and suppresses a further outward movement of the piston (718; 816).

6. Chain tensioner (410; 510; 610) having a piston (416; 616) displaceable in a guide housing (412; 512; 612) along its axis (430; 530), carrying a tensioner head (426) and initially stressed in the direction towards the tensioner head and a catch device acting between guide housing and piston and limiting the inward stroke of the piston from its momentary axial position, with a saw-tooth row (448; 548) formed on the piston circumference extending in the axial direction and a catch bolt (420; 520; 620) movably mounted in a guide aperture (470; 570; 670) of the guide housing, which catch bolt comprises an engagement section radially movable between a blocking position with engagement in the saw-tooth row and a release position out of engagement with the saw-tooth row and initially spring stressed into the blocking position, with additional play in movement in the axial direction to render possible a limited inward stroke of the piston from a momentary axial detent position in each case, characterised in that the catch bolt (420; 520; 620) is formed by a substantially U-shaped wire curved piece the side legs (420a; 520a; 620a) of which extend parallel with the axis in one each of the guide apertures (470; 570; 670) of the housing, the middle leg of which forms the engagement section (420b; 520h; 620b) and the U-piece end zones (420c; 620c) of which are bent over substantially at right angles to the side legs for the formation of a stop section for abutment on stop faces of the guide housing, in that on the guide housing there is provided a guide face (474; 674) inclined in relation to the guide housing axis, for the engagement section, along which the engagemant section is moved positively into the engagement position on a movement of the wire U-piece into its one axial end position, and in that for the production of the initial stress of the engagement end the resiliently formed wire U-piece is bent forward about an axis of curvature parallel to the middle section (420b; 520b; 620b) (Figures 32 to 41).

7. Chain tensioner (310; 310') with a piston (316) displaceable in a guide housing (312; 312') along its axis (330), carrying a tensioner head (326) and initially stressed in the direction towards the tensioner head and a catch device acting between guide housing and piston, and limiting the inward stroke of the piston from its momentary axial position, with a saw-tooth row (348) formed extending in the axial direction on the piston circumference and a catch bolt (320) movably mounted in a guide aperture (370) of the guide housing, which catch bolt comprises an engagement section radially movable between a blocking position with engagement in the sawtooth row and a release position out of engagement with the saw-tooth row and initially spring stressed into the blocking position, with additional play in movement in the axial direction to render possible a limited inward stroke of the piston from a momentary axial detent position in each case, characterised in that the catch bolt (320) is from the substantially axially parallel middle section (320a) of which the engagement section (320b) and a stop section (320c) protrude as side sections at right angles movement or an outward movement of the piston, in that the middle section (320a) is mounted in the guide aperture of the guide housing with radial play for the movement of the engagement position, and in that an initial stressing spring stresses the middle section radially inwards (Figures 27 to 31).

8. Chain tensioner according to Claim 7, characterised in that the initial stressing spring is a leaf spring (368; 368').

9. Chain tensioner (10) with a piston (16) displaceable in a guide housing (12) along its axis (30), carrying a tensioner head (26) and initially stressed in the direction towards the tensioner head and a catch device acting between guide housing and piston and limiting the inward stroke of the piston from its momentary axial position, with a saw-tooth row (48) formed extending in the axial direction on the guide housing and a spring element connected with the piston with an end section which is movable between a blocking position with engagement in the saw-tooth row and a release postiton out of engagement with the saw-tooth row and is initially stressed into the blocking position by reason of corresponding initial spring stress of the spring element, with springing of the piston to render possible a limited inward stroke of the piston from the momentary axial detent position in each case, characterised in that the spring element is formed by a wire spring (20) retained in a circumferential groove (22) of the piston (16), which spring is provided with substantially radially outwardly bent end sections (23) which rest on faces provided lying oppositely to one another on the housing (12) and parallel to the housing axis (30), at least one of which faces is formed as a catch face (24) with the saw-tooth row (48) (Figures 1 to 7).

10. Chain tensioner according to Claim 9, characterised in that the catch faces (24) are provided on the longitudinal edges of a housing piercing (42) which is elongated in the axial direction (30) and preferably closed off on both sides in the axial direction.

11. Chain tensioner according to Claim 9 or 10, characterised in that the housing piercing (42) is provided with a widening groove (50) in the circumferential direction into which at least one of the end sections (23) of the wire spring (20) snaps when the piston (16) is in a position for assembly.

12. Chain tensioner according to Claim 11, characterised in that the engaged end section (23') protrudes beyong the outside (49) of the guide housing (12) and in that the widening groove (50) is arranged in the region of a securing element, especially in the region of a securing bore (40), of the guide housing (12) in such a way that securing of the guide housing (12) on the intended carrier is possible only when the end section (23) is moved out of the widening groove (50).

13. Chain tensioner according to one of Claims 9 to 12, characterised in that the guide housing (12), preferably at the chain tensioner head end of the piercing (42), is provided with an insertion slot (44) lying in a radial plane and opening into the piston bore (14), also with a part-circumferential groove (46), lying in this plane, in the piston bore (14), the ends of which open into the insertion slot (44).

14. Chain tensioner according to one of Claims 9 to 13, characterised in that the guide housing (12a) comprises a substantially cylindrically curved sheet metal piece (54) with a middle piece (54a) of width in the housing circumferential direction less than the housing circumference, of which the mutually spaced longitudinal edges, parallel to the housing axis (30), are provided each with a saw-tooth row (48') for the formation of the catch faces and with securing tabs (54b, 54c) on the two longitudinal ends of the middle piece (54a) for the rigid connection of the longitudinal edges, and in that the middle piece (54a) is provided preferably with an inwardly bent-over support tab (54d) on which a piston initial stressing spring (18) is supported. (Figures 5 - 7).

15. Chain tensioner having a piston (16) displaceable in a guide housing along its axis (30), carrying a tensioner head and initially stressed in the direction towards the tensioner head and a catch device acting between guide housing and piston and limiting the inward stroke of the piston from its momentary axial position, with a saw-tooth row (48) formed extending in the axial direction on the guide housing and a spring element connected with the piston with an end section which is movable between a blocking position with engagement in the saw-tooth row and a release position out of engagement with the saw-tooth row and is initially tensioned into the blocking position by reason of corresponding initial spring stress of the spring element with springing of the piston to render possible a limited inward stroke of the piston from the momentary axial detent position in each case, characterised in that the spring element is formed by an elongated leaf spring (20a; 20b; 20c) which is secured in the region of the middle of its length on the piston (16), preferably on a pin (60) protruding radially from the piston (16) and is bent about an axis of curvature perpendicular to the piston axis (30) in such a way that the leaf spring ends rest under initial stress on the mutually opposite saw-tooth rows (48) at engagement points which lie on the side remote from the tensioner head of the securing point of the leaf spring (20a; 20b; 20c) on the piston (16) (Figures 8 to 12).

16. Chain tensioner (110) with a piston (116) displaceable in a guide housing (112) along its axis (130), carrying a tensioner head (126) and initially stressed in the direction towards the tensioner head, and a catch device acting between guide housing and piston and limiting the inward stroke of the piston from its momentary axial position, with a saw-tooth row (148) formed extending in the axial direction on the guide housing and a spring element connected with the piston with an end section which is movable between a blocking position with engagement in the saw-tooth row and a release position out of engagement with the saw-tooth row and is initially stressed into the blocking position by reason of corresponding initial spring stress of the spring element, with springing of the piston to render possible a limited inward stroke of the piston from the momentary axial detent position in each case, characterised in that the spring element is formed by an elongated leaf spring (120) with a securing section (120a) forming one end for securing on the piston (116) or tensioner head, with a main section (120b) grasping from the exterior over a catch face (124) facing away from the piston and comprising the saw-tooth row (148), and with an end section (120c) forming the other end, bent towards the catch face (124) and resting under initial stress on the latter, the axial total length of main section and end section being at least equal to the maximum working stroke of the piston (116) (Figures 16, 17).

17. Chain tensioner according to Claim 16, characterised in that a stop projection (153) for the end section (120c) is formed on the spanner head end of the catch face (124).

18. Chain tensioner (110") with a piston (116") displaceable along its axis in a guide housing (112"), carrying a tensioner head (126") and initially stressed in the direction towards the tensioner head and a catch device acting between guide housing and piston and limiting the inward stroke of the piston from its momentary axial position, with a saw-tooth row (148") formed extending in the axial direction on the guide housing and a spring element connected with the piston with an end section which is movable between a blocking position with engagement in the saw-tooth row and a release position out of engagement with the saw-tooth row and is initially stressed into the blocking position by reason of corresponding initial spring stress of the spring element, with spring of the piston to render possible a limited inward stroke of the piston from the momentary axial detent position in each case, characterised in that the spring element is formed by a wire U-piece (120") the one end of which, as securing section (120a"; 120a''') grasps around the piston (116"; 116''') or penetrates a radial piston bore, the other end of the wire U-piece engaging from the outer side of the housing in a housing groove (159) extending parallel with the housing axis (130") and resting under initial stress on a groove side wall forming a catch face (124") provided with the saw-tooth row (148") (Figures 19 to 23).

19. Chain tensioner (210) with a piston (216) displaceable along its axis (230) in a guide housing (212), carrying a tensioner head (226) and initially stressed in the direction towards the tensioner head, and a catch device acting between guide housing and piston and limiting the inward stroke of the piston from its momentary axial position, with a saw-tooth row (248) formed on the guide housing and a spring element connected with the piston with an end section which is movable between a blocking position with engagement in the saw-tooth row and a release position out of engagement with the saw-tooth row and is initially stressed into the blocking position by reason of corresponding initial spring stress of the spring element, with springing of the piston to render possible a limited inward stroke of the piston from the momentary axial detent position in each case, characterised in that the saw-tooth row (248) is arranged on the housing (212) extending along a circumferential circle lying in a radial plane centrally in relation to the housing axis (230) and in that the spring element is secured on a slide piece (205) which is mounted movably along the circumferential circle and engages in a spiral groove (207) on the external circumference of the piston (216) (Figures 24 - 26).

20. Chain tensioner according to Claim 19, characterised in that the end zone (209), close to the tensioner head, of the spiral groove (207) is bent away in the direction towards the other end of the spiral groove (207), while preferably the angle point (217) of the groove side wall (211) remote from the tensioner head, of the bent-off end zone (209) of the spiral groove (207) lies closer in the circumferential direction to the corresponding groove end than does the opposite angle point (215) of the groove side wall (213) nearer to the tensioner head.

21. Chain tensioner according to one of the preceding Claims, characterised in that a housing bore (794) intersecting the piston bore (714) of the guide housing (712) and preferably lying in a radial plane is provided which issues from one side face (794a) of the guide housing and into which a locking bolt (792) is insertable for the axial fixing of the piston (716), preferably of relatively easily deformable material and with a middle section (792a) of reduced diameter (Figures 46, 47).

**Revendications**

1. Tendeur de chaîne (710; 810) comprenant dans un boîtier de guidage (712; 812) un piston (716; 816) pouvant se déplacer le long de son axe (730; 830), supportant une tête tendeuse (826) et soumis à une précontrainte en direction de la tête tendeuse, et un dispositif de blocage limitant la course de rentrée du piston à partir de sa position axiale momentanée et agissant entre le boîtier de guidage et le piston, avec une rangée de dents de scie (748; 848) aménagée sur la périphérie du piston en direction axiale et un verrou de blocage (720; 820) comprenant une dent de scie destinée à coopérer avec la rangée de dents de scie (748; 848) et montée dans un évidement de guidage (770; 910) du boîtier de guidage, ce verrou de blocage pouvant se déplacer radialement entre une position de blocage où il est en prise avec la rangée de dents de scie et une position de libération où il n'est plus en prise avec la rangée de dents de scie, et étant soumis à une précontrainte élastique au moyen d'un élément de précontrainte s'appuyant contre le boîtier de guidage quand il est dans la position de blocage, avec un jeu de mouvement additionnel en direction axiale pour permettre une course de rentrée limitée du piston à partir d'une position d'enclenchement axiale momentanée quelconque, caractérisé en ce que le verrou de blocage (720; 820) est monté de manière à se déplacer librement à l'intérieur de l'évidement de guidage (770; 910) dans le plan du mouvement et comprend une rangée de dents de scie (784; 884) complémentaire de la rangée de dents de scie (748; 848) sur la périphérie du piston et s'enclenchant dans cette dernière dans la position de blocage, et en ce qu'li est prévu un biseau de traction incliné en direction de l'axe du piston, constitué sur l'extrémité du verrou de blocage qui est à l'opposé de la tête tendeuse sur ledit verrou de blocage (910) ou sur le boîtier (812), ou formé par le côté du flanc de chacune des dents de la rangée de dents de scie (748) qui est tourné à l'opposé de la tête tendeuse, biseau qui coopère avec le verrou de blocage de manière à déterminer un mouvement radial vers l'intérieur dudit verrou de blocage quand il y a un mouvement de rentrée du piston. (Fig 44, 45, 48).

2. Tendeur de chaîne selon la revendicaton 1, caractérisé en ce qu'une contre-surface (912) d'inclinaison correspondante du boîtier (812) est située face au biseau de traction (906) du verrou de blocage (910). (Fig. 48).

3. Tendeur de chaîne selon la revendication 2, caractérisé en ce que le côté des flancs (884b) des dents de scie qui est à l'opposé de la tête tendeuse (826) est orienté sensiblement radialement.

4. Tendeur de chaîne selon l'une quelconque des revendications précédentes, caractérisé en ce que l'élément de précontrainte est constitué par un ressort à lame (768) monté dans le boîtier de guidage (712; 812) et pressé de préférence dans l'évidement de guidage (790), ou par un ressort de compression hélicoïdal (868) disposé en direction radiale, s'appuyant d'une part contre le verrou de blocage (820) et d'autre part contre le boîtier (812), de préférence contre une équerre de retenue (918) fixée au boîtier.

5. Tendeur de chaîne selon l'une quelconque des revendications précédentes, caractérisé en ce que la rangée de dents de scie (748; 848) est décalée radialement vers l'interieur sur la périphérie du piston, et en ce qu'une surface de butée sensiblement radiale (791; 891) est constituée à l'extrémité de la rangée de dents de scie (748; 848) qui est éloignée de la tête tendeuse, surface de butée qui vient en appui contre le verrou de blocage (720; 820) quand il y a un mouvement de sortie du piston (716; 816) et qui interdit toute poursuite du mouvement de sortie du piston (716; 816).

6. Tendeur de chaîne.(410; 510; 610) comprenant dans un boîtier de guidage (412; 512; 612) un piston (416; 616) pouvant se déplacer le long de son axe (430; 530), supportant une tête tendeuse (426) et soumis à une précontrainte en direction de la tête tendeuse, et un dispositif de blocage limitant la course de rentrée du piston à partir de sa position axiale momentanée et agissant entre le boîtier de guidage et le piston, avec une rangée de dents de scie (448; 548) constituée sur la périphérie du piston en direction axiale et un verrou de blocage (420; 520; 620) monté de façon mobile dans un évidement de guidage (470; 570; 670) du boîtier de guidage, ce verrou de blocage comprenant une section d'enclenchement soumise en position de blocage à une précontrainte élastique, et pouvant se déplacer radialement entre une position de blocage avec prise avec la rangée de dents de scie et une position de libération hors prise avec la rangée de dents de scie, avec un jeu de mouvement additionnel en direction axiale pour permettre une course de rentrée limitée du piston à partir d'une position d'enclenchement axiale momentanée quelconque, caractérisé en ce que le verrou de blocage (420; 520; 620) est constitué par un étrier en fil sensiblement en forme de U, dont les branches latérales (420a; 520a; 620a) sont respectivement parallèles aux évidements de guidage (470; 570; 670) du boîtier, dont la branche centrale forme la section d'enclenchement (420b; 520b; 620b) et dont la région d'extrémité (420c, 620c) est repliée à angle droit en direction des branches latérales pour former une section de butée en vue d'un appui contre des surfaces de butée du boîtier de guidage, en ce qu'une surface de guidage (474; 674) inclinée en direction de l'axe du boîtier de guidage est prévue dans le boîtier de guidage pour la section d'enclenchement, surface le long de laquelle la section d'enclenchement est amenée obligatoirement à la position d'enclenchement quand il y a mouvement de l'étrier en fil vers sa position d'extrémité axiale, et en ce que l'étrier en fil constitué de façon élastique est précambré autour d'un axe de courbure parallèle à la section centrale (420b; 520b; 620b) pour réaliser la precontrainte de l'extrémité d'enclenchement. (Fig. 32 à 41).

7. Tendeur de chaîne (310; 310') comprenant dans un boîtier de guidage (312; 312') un piston (316) pouvant se déplacer le long de son axe (330), supportant une tête tendeuse (326) et soumis a une précontrainte en direction de la tête tendeuse, et un dispositif de blocage limitant la course de rentrée du piston à partir de sa position axiale momentanée et agissant entre le boîtier de guidage et le piston, avec une rangée de dents de scie (348) aménagée sur la périphérie du piston en direction axiale et un verrou de blocage (320) monté de façon mobile dans un évidement de guidage (370) du boîtier de guidage, ce verrou de blocage comprenant une section d'enclenchement soumise en position de blocage à une précontrainte élastique, et pouvant se déplacer radialement entre une position de blocage avec prise avec la rangée de dents de scie et une position de libération hors prise avec la rangée de dents de scie, avec un jeu de mouvement additionnel en direction axiale pour permettre une course de rentrée limitée du piston à partir d'une position d'enclenchement axiale momentanée quelconque, caractérisé en ce que le verrou de blocage (320) est constitué par un étrier de blocage rigide et sensiblement en forme de U, dont la section centrale (320a), qui est sensiblement parallèle à l'axe en tant que section laterale de la section d'enclenchement (320b), ainsi qu'une section de butée (320c) font saillie à angle droit en vue de venir en appui sur des surfaces de butée du boîtier de guidage dans le cas d'un mouvement de rentrée ou d'un mouvement de sortie du piston, en ce que la section centrale (320a) est montée dans l'évidement de guidage du boîtier de guidage avec un jeu radial en vue du mouvement de la section d'enclenchement entre sa position de blocage et sa position d'enclenchement, et en ce qu'un ressort de précontrainte sollicite la section centrale radialement vers l'intérieur. (Fig. 27 à 31).

8. Tendeur de chaîne selon la revendication 7, caractérisé en ce que le ressort de précontrainte est un ressort à lame (368; 368').

9. Tendeur de chaîne (10) comprenant dans un boîtier de guidage (12) un piston (16) pouvant se déplacer le long de son axe (30), supportant une tête tendeuse (26) et soumis à une précontrainte en direction de la tête tendeuse, et un dispositif de blocage limitant la course de rentrée du piston à partir de sa position axiale momentanée et agissant entre le boîtier de guidage et le piston, avec une rangée de dents de scie (48) aménagée sur le boîtier de guidage en direction axiale, et un élément de ressort relié au piston et comprenant une section d'extrémité qui est mobile entre une position de blocage avec prise dans la rangée de dents de scie et une position de libération hors prise dans la rangée de dents de scie, et est soumise à une précontrainte dans la position de blocage du fait d'une précontrainte élastique correspondante de l'élément de ressort, avec une suspension du piston pour permettre une course de rentrée limitée dudit piston à partir de sa position d'enclenchement axiale momentanée, caractérisé en ce que l'élément élastique est constitué par un ressort en fil (20) retenu dans une gorge périphérique (22) du piston (16), ce ressort étant muni de sections d'extrémité (23) repliées vers l'extérieur et sensiblement radialement, qui s'appliquent contre des surfaces parallèles à l'axe (30) du boîtier prévues face à face dans le boîtier (12), dont l'une au moins est constituée sous forme d'une surface de blocage (24) comprenant la rangée de dents de scie (48). (Fig. 1 à 7).

10. Tendeur de chaîne selon la revendication 9, caractérisé en ce que les surfaces de blocage (24) sont prévues sur les bords longitudinaux d'un perçage (42) du boîtier, de préférence fermé des deux côtés en direction de l'axe et s'étendant longitudinalement dans la direction (30) de l'axe.

11. Tendeur de chaîne selon la revendication 9 ou 10, caractérisé en ce que le perçage (42) du boîtier est muni d'une rainure élargie (50) en direction périphérique, dans laquelle s'enclenche au moins l'une des sections d'extrémité (23) du ressort en fil (20) dans une position de montage du piston (16).

12. Tendeur de chaîne selon la revendication 11, caractérisé en ce que la section d'extrémité enclenchée (23') fait saillie sur le côté extérieur (49) du boîtier de guidage (12), et en ce que la rainure élargie (50) est disposée dans la zone d'un élément de fixation, notamment dans la zone d'un alésage de fixation (40), du boîtier de guidage (12) de manière à rendre possible la fixation du boîtier de guidage (12) sur le support prévu seulement quand la section d'extrémite (23) sort de la rainure élargie (50).

13. Tendeur de chaîne selon l'une quelconque des revendications 9 à 12, caractérisé en ce que le boîtier de guidage (12) est muni, de préférence à l'extremité du perçage (42) qui est du côté de la tête tendeuse de chaîne, d'une fente d'introduction (44) débouchant dans l'alésage (14) du piston et située dans un plan radial ainsi que d'une rainure périphérique partielle (46) située dans ce plan dans l'alésage (14) du piston, et dont les extrémités débouchent dans la fente d'introduction (44).

14. Tendeur de chaîne selon l'une quelconque des revendications 9 à 13, caractérisé en ce que le boîtier de guidage (12a) est constitué par une partie en tôle (54) repliée essentiellement de façon cylindrique, comprenant une partie centrale (54a) de largeur plus faible en direction périphérique du boîtier que la périphérie de ce boîtier, dont les bords longitudinaux qui sont parallèles à l'axe (30) du boîtier et sont situés à une certaine distance l'un de l'autre sont munis chacun d'une rangée de dents de scie (48') en vue de former les surfaces de blocage, et de pattes de fixation (54b, 54c) aux deux extrémités longitudinales de la partie centrale (54a) en vue de réaliser une liaison rigide des bords longitudinaux, et en ce que la partie centrale (54a) est munie de préférence d'une patte d'appui (54d) repliée vers l'intérieur, sur laquelle s'appuie un ressort de précontrainte de piston (18). (Fig. 5-7).

15. Tendeur de chaîne comprenant dans un boîtier de guidage un piston (16) pouvant se déplacer le long de son axe (30), supportant une tête tendeuse et soumis à une précontrainte en direction de la tête tendeuse, et un dispositif de blocage limitant la course de rentrée du piston à partir de sa position axiale momentanée et agissant entre le boîtier de guidage et le piston, avec une rangée de dents de scie (48) aménagée sur le boîtier de guidage en direction axiale, et un élément de ressort relié au piston comprenant une section d'extrémité qui est mobile entre une position de blocage avec prise dans la rangée de dents de scie et une position de libération hors prise avec la rangée de dents de scie et est soumise à une précontrainte dans la position de blocage du fait d'une précontrainte élastique correspondante de l'élément de ressort, avec une suspension du piston pour permettre une course de rentrée limitée dudit piston à partir de sa position d'enclenchement axiale momentanée, caractérisé en ce que l'élément élastique est forme par un ressort à lame allongé (20a; 20b; 20C;) qui est fixé dans la zone de sa partie médiane longitudinale au piston (16), de préférence à une tige (60) faisant saillie radialement du piston (16), et est replié autour d'un axe de courbure qui est perpendiculaire à l'axe (30) du piston de manière que les extrémités du ressort à lame s'appliquent sous précontrainte contre les rangées de dents de scie (48) situées face à face, dans des positions d'enclenchement qui sont situées sur le côté de la position de fixation du ressort à lame (20a; 20b; 20c) sur le piston (16), qui est éloigné de la tête tendeuse. (Fig. 8 à 12).

16. Tendeur de chaîne (110) comprenant dans un boîtier de guidage (112) un piston (116) pouvant se déplacer le long de son axe (130), supportant une tête tendeuse (126) et soumis à une précontrainte en direction de la tête tendeuse, et un dispositif de blocage limitant la course de rentrée du piston à partir de sa position axiale momentanée et agissant entre le boîtier de guidage et le piston, avec une rangée de dents de scie (148) aménagée en direction axiale sur le boîtier de guidage, et un élément de ressort relié au piston et comprenant une section d'extrémité qui est mobile entre une position de blocage en prise dans la rangée de dents de scie et une position de libération hors prise avec la rangée de dents de scie et est soumise à une précontrainte dans la position de blocage du fait d'une précontrainte élastique correspondante de l'élément de ressort, avec une suspension du piston pour permettre une course de rentrée limitée dudit piston à partir de sa position d'enclenchement axiale momentanée, caractérisé en ce que l'élément de ressort est constitué par un ressort à lame allongé (120) comprenant une section de fixation (120a) formant une extrémité et servant à la fixation au piston (116) ou à la tête tendeuse, une section principale (120b) qui est face au piston et entoure de l'exterieur la surface de blocage (124) comprenant la rangée de dents de scie (148), ainsi qu'une section d'extrémité (120c) formant l'autre extrémité, recourbée en direction de la surface de blocage (124) et s'appliquant sous précontrainte contre cette dernière, la longueur axiale d'ensemble de la section principale et de la section d'extrémité étant au moins égale à la course de travail maximale du piston (116). (Fig. 16, 17).

17. Tendeur de chaîne selon la revendication 16, caractérisé en ce qu'une saillie de butée (153) destinée à la section d'extrémité (120c) est aménagée à l'extrémité de la surface de blocage (124) qui est du côté de la tête tendeuse.

18. Tendeur de chaîne (110'') comprenant dans un boîtier de guidage (112'') un piston (116'') pouvant se déplacer le long de son axe, supportant une tête tendeuse (126'') et soumis à une précontrainte en direction de la tête tendeuse, et une dispositif de blocage limitant la course de rentrée du piston à partir de sa position axiale momentanée et agissant entre le boîtier de guidage et le piston, et comprenant une rangée de dents de scie continue (148'') aménagée en direction axiale sur le boîtier de guidage et un élément de ressort relié au piston, comprenant une section d'extrémité montée de façon à pouvoir se déplacer entre une position de blocage où elle est en prise avec la ranéee de dents de scie et une position de libération où elle n'est plus en prise avec la rangée de dents de scie et est soumise à une précontrainte dans la position de blocage du fait d'une précontrainte élastique correspondante de l'élément de ressort, avec une suspension du piston pour permettre une course de rentrée limitée dudit piston à partir de sa position d'enclenchement axiale momentanée, caractérisé en ce que l'élément de ressort est constitué par un étrier en fil (120'') dont l'une des extrémités entoure le piston (116''; 116''') en tant que section de fixation (120a''; 120a''') ou traverse un alésage radial du piston, l'autre extrémité de l'étrier en fil pénétrant à partir du côté extérieur du boîtier dans une rainure (159) du boîtier qui est parallèle à l'axe (130'') du boîtier et qui repose sous précontrainte contre une paroi latérale de la rainure formant une surface de blocage (124'') munie de la rangée de dents de scie (148''). (Fig. 19 à 23).

19. Tendeur de chaîne (210) comprenant dans un boîtier de guidage (212) un piston (216) pouvant se déplacer le long de son axe, supportant une tête tendeuse (226) et soumis à une précontrainte en direction de la tête tendeuse, et un dispositif de blocage limitant la course de rentrée du piston à partir de sa position axiale momentanée et agissant entre le boîtier de guidage et le piston, avec une rangée de dents de scie continue (248) aménagée sur le boîtier de guidage et un élément de ressort relié au piston, comprenant une section d'extrémite montée de façon mobile de façon à pouvoir se déplacer radialement entre une position de blocage où elle est en prise avec la rangée de dents de scie et une position de libération où elle n'est plus en prise avec la rangée de dents de scie et est soumise à une précontrainte dans la position de blocage du fait d'une précontrainte élastique correspondante de l'élément de ressort, avec une suspension du piston pour permettre une course de rentrée limitée dudit piston à partir de sa position d'enclenchement axiale momentanée, caractérisé en ce que la rangée de dents de scie (248) s'étend dans le boîtier (212) le long d'un cercle périphérique centré sur l'axe (230) du boîtier et disposé dans un plan radial et en ce que l'élément du ressort est fixé à un élément de glissement (205) qui est monté mobile le long du cercle périphérique et pénètre dans une rainure en spirale (207) sur la périphérie extérieure du piston (216). (Fig. 24-26).

20. Tendeur de chaîne selon la revendication 19, caractérisé en ce que la zone d'extrémité (209) de la rainure en spirale (207) qui est proche de la tête tendeuse est repliée en direction de l'autre extrémité de la rainure en spirale (207), la position de pliage (217) de la paroi latérale (211) de la région d'extrémité repliée (209) de la rainure en spirale (207) qui est éloignée de la tête tendeuse étant de préférence située plus près en direction périphérique de l'extrémité correspondante de la rainure que la position de pliage opposée (215) de la paroi latérale (213) de la rainure qui est proche de la tête tendeuse.

21. Tendeur de chaîne selon l'une quelconque des revendications précédentes, caractérisé en ce qu'il est prévu un alésage de boîtier (794) disposé de préférence dans un plan radial intersectant l'alésage de piston (714) du boîtier de guidage (712), partant d'une surface latérale (794) du boîtier de guidage et dans lequel peut être enfoncée une tige de verrouillage (792) pour la fixation axiale du piston (717), de préférence en un matériau relativement facilement déformable et présentant une section médiane (792a) de diamètre plus faible. (Fig. 46, 47).

FIG.2 FIG.1 FIG.3 FIG.4 FIG.5 FIG.6 FIG.7

FIG. 8

FIG. 9

FIG. 10

FIG. 11

FIG. 12

FIG. 13

FIG. 14

FIG. 15

FIG.16

FIG.17

FIG. 18

FIG.22    FIG.23

FIG.19 i

FIG.20

FIG. 21

FIG. 24

FIG. 26

FIG. 25

FIG.27

FIG.28

FIG.31

FIG.30

FIG.29

...

0 106 325

FIG. 32

FIG.33

FIG. 35

FIG.34

11

FIG. 36

510
530
XXXVIII
XXXVIII
512

FIG.37
530
XXXVIII
XXXVIII
548
576
VIII A
512
580

570 520b 520 520a 570 549a
580
512

520d

FIG.38

FIG. 39

FIG. 40

FIG. 42

FIG. 43

FIG. 41

FIG.44

FIG.45

FIG.46

FIG.47

# FIG.48